# EUROPÄISCHE PATENTSCHRIFT

(11) **EP 1 503 089 B1**
(45) Veröffentlichungstag und Bekanntmachung des Hinweises auf die Patenterteilung: **21.12.2005**
(21) Anmeldenummer: 03090235.7
(22) Anmeldetag: 26.07.2003
(51) Int. Cl.: F16B 5/04, F16B 19/10, F16B 19/08

(54) **Verfahren zum Verbinden von Bauteilen mit einseitiger Zugänglichkeit und Verbund von derartigen Bauteilen**
Method for connecting pieces accessible only from one side and assembly of such pieces
Méthode d'assemblage de pièces accessibles d'un seul côté et assemblage de telles pièces

(43) Veröffentlichungstag der Anmeldung: 02.02.2005
(73) Patentinhaber: INPRO Innovationsgesellschaft für fortgeschrittene Produktionssysteme in der Fahrzeugindustrie mbH, 10587 Berlin (DE)
(72) Erfinder: Gigengack, Thomas, Dipl.-Ing., 10785 Berlin (DE); Mende, Torsten, Dipl.-Ing., 49688 Lastrup (DE); Kaya, Selahattin, Dipl.-Wi.-Ing. (FH), 12043 Berlin (DE)
(74) Vertreter: Hoffmann, Klaus-Dieter

(56) Entgegenhaltungen:
- DE-A- 4 001 723
- DE-A- 19 701 252
- DE-A- 19 716 431
- US-A- 4 990 042
- US-A1- 2002 125 297

## Beschreibung

Die Erfindung betrifft ein Verfahren zum Verbinden von Bauteilen mit einseitiger Zugänglichkeit unter Verwendung eines Blindniets mit einer einen Setzkopf aufweisenden Blindniethülse und einem in deren Bohrung koaxial geführten Nietdorn, der am blindseitigen Ende des Blindniets einen Dornkopf aufweist, dessen Durchmesser größer als der der Blindniethülse ist.

Die Erfindung betrifft ferner einen Verbund von Bauteilen mit einseitiger Zugänglichkeit und einem die Bauteile verbindend durchsetzenden Blindniet, der aus einer einen Setzkopf aufweisenden Blindniethülse und einem in deren Bohrung koaxial geführten Nietdorn besteht, der am blindseitigen Ende des Blindniets einen Dornkopf aufweist, dessen Durchmesser größer als der der Blindniethülse ist.

Bei einem bekannten Verfahren zum Fügen von aufeinanderliegenden dünnen Blechen (DE 197 01 252 Al) wird mit einem aufgesetzten Bolzenschußgerät ein eine Niethülse aufweisender Hohlniet und ein in der Niethülse koaxial steckender Nietdorn die Bleche durchsetzend eingetrieben, bis ein einschußseitiger Setzkopf des Hohlniets an dem einschußseitigen Blech anschlägt, wobei das austrittsseitige Hohlnietende von innen zu einem das andere Blech übergreifenden Schließkopf aufgeweitet wird. Der Nietdorn ist mit einem frontseitig erweiterten Kopf versehen, der die Niethülse frontseitig abdeckt und vorn einen Spitzkonus und hinten einen Spreizkonus trägt. Nach dem Einschießen wird der Nietdorn ganz zurückgezogen oder teilweise zurückgezogen und abgebrochen.

Bekannt ist weiterhin (DE 197 16 431 Al), mit Hilfe des Fließlochformens in dünnwandigen Bauteilen, Blechen, Profilen oder Hohlprofilen Durchzüge zu erzeugen. Hierbei wird ein schnellrotierender Hartmetallkegeldorn mit polygonalem Formgebungsquerschnitt unter axialer Kraftbeaufschlagung auf das Werkstück gedrückt. Die entstehende Reibungs- und Umformarbeit bewirkt eine deutliche Temperaturerhöhung im Bereich der Bearbeitungsstelle und setzt hierdurch die Festigkeit des Werkstoffes herab. Der Fließformdorn läßt sich unter reduziertem Kraftaufwand durch das Blech drücken. Etwa 40% des beim Fließformen verdrängten Materials werden entgegen der Vorschubrichtung des Fließformdorns nach oben verdrängt.

Zum Verbinden von beidseitig zugänglichen Bauteilen dient ferner ein selbstbohrender Blindniet, wie er aus der DE 40 01 723 A1 hervorgeht. Dieser bekannte selbstbohrende Blindniet umfaßt einen Nietkörper, der eine Bohrung hat, einen Dorn, der in der Bohrung des Nietkörpers eingefangen ist und einen Flansch an seinem einen Ende hat, welcher den gleichen Durchmesser wie der Nietkörper besitzt, und einen Bohrer, der einen geschmiedeten Bohrabschnitt aufweist und an dem Flansch vorgesehen ist. Beim Einsatz des selbstbohrenden Blindniets erweisen sich die vom Bohrer erzeugten Werkstoffbohrspäne jedoch als nachteilig, die in nicht kontrollierbarer Weise in die Nietverbindung geraten können, so daß deren Festigkeit unter Umständen nicht gewährleistet ist.

Bekannt ist auch ein Blindniet mit einem hülsenförmigen Nietkörper und einem in diesen liegenden Nietschaft, der einen erweiterten Nietkopf am blindseitigen Ende trägt (deutsches Gebrauchsmuster G 93 02 633 U1). Ein solcher Blindniet wird bei einseitiger Zugänglichkeit eines Bauteiles, z.B. einer Wandplatte verwendet. Der Blindniet wird in eine Bohrung der Wandplatte eingefügt, und anschließend wird der Nietschaft zusammen mit dem Nietkopf zurückgezogen, so daß der Nietkopf den hülsenförmigen Nietkörper von der Blindseite her auseinandertreibt und damit auf der Blindseite verankert. Um ein Vorbohren der Wandplatte unnötig zu machen, kann der Nietschaft mit einer scharfen Spitze versehen werden, so daß der Blindniet mit Hilfe eines Setzgerätes durch ein dünnwandiges, verhältsnismäßig weiches Plattenmaterial, wie Sperrholz, Gipskarton, Pappe und dergleichen hindurchgestoßen und anschließend verankert werden kann.

Bekannt ist schließlich auch ein Verbund von Bauteilen mit einseitiger Zugänglichkeit und einem die Bauteile verbindenden Blindniet, der mittels einer axial gerichteten Vorschubkraft setzbar ist (US 4 990 042A), wobei der Blindniet aus einer einen Setzkopf aufweisenden Blindniethülse und einem in deren Bohrung koaxial geführten Nietdorn besteht, der am blindseitigen Ende des Blindniets einen spitzkegelig zulaufenden und mit Schneidflächen versehenen Bohrkopf aufweist, dessen Durchmesser größer als der der Blindniethülse ist und an dessen Umfangsfläche zueinander beabstandete Entgratungselemente vorgesehen sind, die nach Entgratung der beim Eindringen des Bohrkopfes in die zugängliche Oberfläche des Bauteilverbundes gebildeten Grate abbrechen. Der Netdorn ist mittels einer Axialkraft, die zu der axial gerichteten Vorschubkraft entgegengesetzt gerichtet ist, relativ zur Blindniethülse bis zur Festsetzung des Bohrkopfes des Nietdorns in der abgedichteten Verbindungsstelle der beiden Bauteile axial rückziehbar. Die Bohrspitze des Bohrkopfes des gesetzten selbstbohrenden Blindniets ragt auf der unzugänglichen Seite der abgedichteten Verbindungsstelle aus dieser ungeschützt heraus und ist korrosionsanfällig.

Insbesondere im Kraftfahrzeugbau sind geeignete Fügeverfahren bei einseitiger Zugänglichkeit der Fügestelle, z.B. für die Anbindung von Blechen an einseitig zugängliche Profile gefordert.

Der Erfindung liegt daher die Aufgabe zugrunde, ein Verfahren zum Verbinden von Bauteilen mit einseitiger Zugänglichkeit gemäß der eingangs erwähnten Art sowie eine Verbundanordnung von Bauteilen mit einseitiger Zugänglichkeit zur Verfügung zu stellen, mit dem bzw. bei der ohne Anfall von Werkstoffbohrspänen und ohne unzulässige Verformungen von Bauteilflächen eine vollständig dichte Verbindungsstelle der zu verbindenden Bauteile erzielt werden kann bzw. gegeben ist.

Diese Aufgabe wird erfindungsgemäß gelöst durch die Kombination der folgenden Verfahrensschritte:
- der Dornkopf des Nietdorns des Blindniets wird derart ausgebildet, daß ein am blindseitigen Ende der Blindniethülse angeordneter zylindrischer, zur Längsachse des Nietdorns symmetrischer Domkopfabschnitt, dessen Durchmesser größer als der der Blindniethülse ist, in einen in Vorschubrichtung des Blindniets kegelstumpfförmigen Dornkopfabschnitt mit zur Längsachse des Nietdorns senkrecht verlaufender Stirnfläche übergeht,
- der gesamte Blindniet wird um seine Längsachse in Drehung versetzt und mit der planen Stirnfläche des rotierenden Dornkopfes mit einer axial gerichteten Vorschubkraft gegen das dem Dornkopf zugewandte Bauteil gedrückt,
- wobei der Bauteilwerkstoff im Bereich der Bearbeitungsstelle erwärmt und fließfähig gemacht wird, der rotierende Dornkopf fortlaufend ein die beiden Bauteile durchsetzendes Fließloch den überschüssigen Bauteilwerkstoff aus dem Fließloch verdrängt, der dabei mit dem Dornkopf kappenartig verbunden wird, der Blindniet spanlos die zu verbindenden Bauteile durchdringt, bis der Setzkopf der Bindniethülse an dem dieser zugewandten Bauteil zur Anlage kommt, und der sich mit dem Dornkopf verbindende überflüssige Bauteilwerkstoff den Dornkopf übergreift und sich abdichtend mit dem blindseitigen Ende des Blindniethülse verbindet,
- worauf der Nietdorn durch eine zur axial gerichteten Vorschubkraft entgegengesetzt gerichtete Axialkraft zurückgezogen wird und die Blindniethülse blindseitig dabei derart gestaucht wird, daß die Bauteile durch den Blindniet abdichtend fest miteinander verbunden werden und der Dornkopf in der Verbindungsstelle der beiden Bauteile verbleibt.

Vorzugsweise wird bei der Fließlochformung des rotierenden Dornkopfes der von diesem aus dem Fließloch verdrängte überflüssige Bauteilwerkstoff mit dem Dornkopf kaltverschweißt und/oder mechanisch formschlüssig verbunden. Bevorzugt wird auch ein Nietdorn verwendet, der eine innerhalb der Blindniethülse gelegene Sollbruchstelle aufweist, wobei die Stauchung des blindseitigen Endes der Niethülse durch die Einwirkung der den Setzkopf der Blindniethülse bebeaufschlagenden axial gerichteten Vorschubkraft und der zu letzterer entgegengesetzten, am Nietdorn angreifenden Axialkraft bis hin zum Bruch der Sollbruchstelle des Nietdorns erfolgt, worauf der Restnietdorn aus dem offenen Ende der Blindniethülse entfernt wird, während der Dornkopf in der abgedichteten festen Verbindungsstelle der beiden Bauteile verbleibt. Es kann auch ein Blindniet verwendet werden, bei dem in der Bohrung der Blindniethülse anstelle des Nietdorns ein Blindnietgewindebolzen geführt ist, dessen Dornkopf nach dem Blindnieten der beiden Bauteile in deren Verbindungsstelle verbleibt und der sich weiterhin aus dem offenen Ende der Blindniethülse erstreckt und für Montagezwecke verfügbar ist. Alternativ kann auch ein Blindniet verwendet werden, dessen Blindniethülse an ihrem setzkopfseitigen Ende mit einer Blindnietmutter als Funktionselement ausgebildet wird. Der Mantel des kegelstumpfförmigen Abschnitts des Dornkopfes des Nietdorns bzw. des Blindnietgewindebolzens kann mit umlaufenden Nuten versehen werden, in denen der vom Dornkopf beim Fließformen verdrängte überflüssige Bauteilwerkstoff formschlüssig mit dem Dornkopf verbunden wird. Die umlaufenden Nuten können so im Dornkopf ausgebildet werden, daß mindestens eine Oberkante der Nuten parallel zur Stirnfläche des kegelstumpfförmigen Abschnitts des Dornkopfes verläuft, wodurch eine optimale mechanische formschlüssige Verbindung des den Dornkopf kappenartig umfassenden überschüssigen Bauteilwerkstoffes mit dem Dornkopf gewährleistet wird. Von Wichtigkeit ist ferner, daß die Geometrie des Dornkopfes sowie die auf den Blindniet ausgeübte axialgerichtete Vorschubkraft und die Rotationsgeschwindigkeit des Dornkopfes so aufeinander abgestimmt werden, daß der vom Dornkopf beim Fließformen verdrängte überflüssige Bauteilwerkstoff und der Dornkopf eine mechanische formschlüssige Verbindung eingehen. Auch kann die Blindniethülse an ihrem blindseitigen Ende mit dem Nietdorn bzw. dem Blindnietgewindebolzen des Blindniets stofflich verbunden gestaltet werden, und es ist möglich, mehr als zwei Bauteile gleichzeitig mit dem erfindungsgemäßen Verfahren mit einem Blindniet problemlos zu verbinden. Zur zielgenaueren Führung des rotierenden Dornkopfes gegen die zugewandte Bauteilfläche im entsprechenden Bearbeitungsbereich eignet sich eine Ausführungsform des Blindniet , bei der auf der Stirnfläche des kegelstumpfförmigen Abschnitts des Dornkopfes koaxial ein verhältnismäßig kleines, kegelstumpfförmiges Zentrierelement als Aufsatzspitze ausgebildet ist. Der Einsatz dieser Ausführungsform hat sich insbesondere beim Blindvernieten einseitig zugänglicher Bauteile aus Aluminium als vorteilhaft erwiesen.

Die oben benannte Aufgabe wird auch erfindungsgemäß gelöst durch einen Verbund von Bauteilen mit einseitiger Zugänglichkeit und einem die Bauteile verbindend durchsetzenden Blindniet, der eine einen Setzkopf aufweisende Blindniethülse und einen in deren Bohrrung koaxial geführten Nietdorn aufweist, der am blindseitigen Ende des Blindniets einen Domkof besitzt, dessen Durchmesser größer als der der Blindniethülse ist, wobei die Blindniethülse und der Nietdorn gemeinsam um die Längsachse des Blindniets in Drehung versetzbar und zugleich in Vorschubrichtung des Blindniets axial vortreibbar sind, der Dornkopf des Nietdorns am blindseitigen Ende des Blindniethülse einen zylindrischen, zur Längsachse des Nietdorns symmetrisch angeordneten Dornkopfabschnitt aufweist, dessen Durchmesser größer als der der Blindniethülse ist und der in einen in Vorschubrichtung des Dornkopfes kegelstumpfförmigen Dornkopfabschnitt übergeht, dessen zur Längsachse des Nietdorns senkrecht verlaufende Stirnfläche gegen die gegenüberliegende Fläche des benachbarten Bauteils beim axial gerichteten Vortrieb des Blindniets rotierend drückbar ist, wobei der Bauteilwerkstoff im Bearbeitungsbereich des ersten Bauteils erwärmbar und in fließfähigen Zustand versetzbar, ein die Bauteile durchsetzendes Fließloch formbar und dabei der überflüssige Bauteilwerkstoff verdrängbar ist, der den Dornkof in Form einer Kappe übergreift und mit der Oberfläche des letzteren und dem Außenmantel der Blindniethülse des Blindniets, der durch das Fließloch bis zum Anschlag des Setzkopfes des Blindniets an der Fläche des ersten Bauteils rotierend vortreibbar ist, am blindseitigen Ende der Blindniethülse abdichtend verbindbar ist, und wobei der Nietdorn mittels einer Axialkraft, die zur axial gerichteten Vorschubkraft entgegengesetzt gerichtet ist, relativ zur Blindniethülse unter Stauchung des blindseitigen Endes der Blindniethülse bis zur Festsetzung des Dornkopfes in der abgedichteten Verbindungsstelle der beiden Bauteile axial rückziehbar ist.

Vorteilhafte Weiterbildungen des erfindungsgemäßen Verbundes gehen aus den Patentansprüchen 15 bis 22 hervor.

Das erfindungsgemäße Verfahren ermöglicht in überraschender Weise ein praktisch gratloses und zugleich spanloses Blindvernieten von Bauteile mit einseitiger Zugänglichkeit. Unzulässige Verformungen der Bauteilflächen wie beim Nietschießen treten nicht auf, und die Wärmeeinflußzonen sind in den zu verbindenden Bauteilen beim Fließlochformen verhältnismäßig klein. Außerdem wird mit dem erfindungsgemäßen Verfahren eine vollständige Dichtigkeit der Bauteilverbindung erzielt.

Die Erfindung wird nun anhand der Zeichnungen erläutert. In diesen sind:
**Fig. 1** eine Schnittansicht eines in einer ersten Verfahrensweise verwendbaren Blindniets in Zuordnung zu zwei miteinander zu verbindenden Bauteilen,
**Fig. 2** eine der Fig. 1 entsprechende Schnittansicht des Blindniets, wobei der Bereich der Bearbeitungsstelle im nächstliegende Bauteil nach Eindringen des Dornkopfes gezeigt ist,
**Fig. 3** eine den Fig. 1 und 2 entsprechende Schnittansicht nach Durchsetzen des Blindniets durch die zu verbindenden Bauteile bis zum Anschlag des Setzkopfes der Blindniethülse an dem dieser zugewandten Bauteil,
**Fig. 4** eine den Fig. 1 bis 3 entsprechende Schnittansicht in der die beiden Bauteile verbindenden Phase des Blindvernietens,
**Fig. 5** eine den Fig. 1 bis 4 entsprechende Schnittansicht, in der die Bauteile durch den Blindniet abgedichtet fest miteinander verbunden sind und der Restnietdorn aus der Bauteilverbindung entfernt worden ist,
**Fig. 6** eine der Fig. 1 entsprechende Schnittansicht des Blindniets zur Verwendung in einer zweiten Verfahrensweise in Zuordnung zu den zu verbindenden Bauteilen, wobei das dem Dornkopf des Blindniets zugewandte Bauteil mit einer Vorlochung versehen ist,
**Fig. 7** eine der Fig. 2 entsprechende Schnittansicht, wobei der Dornkopf des Blindniets nach Führen durch die Vorlochung des ersten Bauteils bereits in das zweite Bauteil eingedrungen ist,
**Fig. 8** eine der Fig. 3 entsprechende Schnittansicht nach Durchsetzen der Blindniets durch die beiden zu verbindenden Bauteile bis zum Anschlag des Setzkopfes der Blindniethülse an dem letzteren zugewandten Bauteil,
**Fig. 9** eine der Fig. 4 entsprechende Schnittansicht in der die beiden Bauteile verbindenden Phase des Blindvernietens,
**Fig. 10** eine der Fig. 5 entsprechende Schnittansicht, wobei die beiden Bauteile durch den Blindniet abgedichtet fest miteinander verbunden sind und der Restnietdorn aus der Bauteilverbindung entfernt worden ist,
**Fig. 11** eine der Fig. 1 entsprechende Schnittansicht eines Blindniets zur Verwendung in einer dritten Verfahrensweise, wobei jedoch anstelle des Nietdorns nach Fig. 1 in der Blindniethülse ein Blindnietgewindebolzen mit Dornkopf geführt ist,
**Fig. 12** eine der Fig. 11 entsprechende Schnittansicht des Blindniets, wobei der Bereich der Bearbeitungsstelle im nächstliegenden Bauteil nach Eindringen des Dornkopfes des Blindnietgewindebolzens in dieses gezeigt ist,
**Fig. 13** eine den Fig. 11 und 12 entsprechende Schnittansicht des Blindniets nach Durchsetzen des in der Blindniethülse geführten Blindnietgewindebolzens durch die beiden Bauteile bis zum Anschlag des Setzkopfes der Blindniethülse an dem letzterem zugewandten Bauteil,
**Fig. 14** eine den Fig. 11 bis 13 entsprechende Schnittansicht des Blindniets in der die beiden Bauteile verbindenden Phase des Blindvernietens,
**Fig. 15** eine den Fig. 11 bis 14 entsprechende Schnittansicht des Blindniets, wobei die beiden Bauteile abgedichtet fest durch den Blindnietgewindebolzen verbunden sind,
**Fig. 16** eine der Fig. 11 entsprechende Schnittansicht des Blindniets zur Verwendung in einer vierten Verfahrensweise in Zuordnung zu den zu verbindenden Bauteilen, wobei das dem Dornkopf des Blindnietgewindebolzens zugewandte Bauteil mit einer Vorlochung versehen ist,
**Fig. 17** eine der Fig. 12 entsprechende Schnittansicht des Blindniets, wobei der Blindnietgewindebolzen nach Führen durch die Vorlochung des ersten Bauteils bereits in das zweite Bauteil eingedrungen ist,
**Fig. 18** eine der Fig. 13 entsprechende Schnittansicht des Blindniets nach Durchsetzen des in der Blindniethülse geführten Blindnietgewindebolzens bis zum Anschlag des Setzkopfes der Blindniethülse an dem letzterem zugewandten Bauteil,
**Fig. 19** eine der Fig. 14 entsprechende Schnittansicht der Blindniets in der die beiden Bauteile verbindenden Phase des Blindvernietens,
**Fig. 20** eine der Fig. 15 entsprechende Schnittansicht des Blindniets, wobei die beiden Bauteile durch den Blindnietgewindebolzen abgedichtet fest miteinander verbunden sind,
**Fig. 21** eine Schnittansicht einer weiteren Ausführungsform des Blindniets, bei der der Mantel des kegelstumpfförmigen Abschnitts des Dornkopfes des Nietdorns umlaufende Nuten aufweist,
**Fig. 22** eine der Fig. 20 entsprechende Schnittansicht einer weiteren Ausführungsform des Blindniets mit in der Blindniethülse geführtem Blindnietgewindebolzen, dessen Dornkopf mit umlaufenden Nuten versehen ist, während des Stauchens des blindseitigen Endes der Blindniethülse,
**Fig. 23** eine Schnittansicht einer weiteren Ausführungsform des Blindniets mit am setzkopfseitigen Ende der Blindniethülse vorgesehener Blindnietmutter als Funktionselement,
**Fig. 24** eine der Fig. 23 entsprechende Schnittansicht des Blindniets in der die beiden Bauteile abdichtend miteinander verbindenden Position nach Entfernen des Restnietdorns aus der Blindniethülse und
**Fig. 25** eine Schnittansicht einer weiteren Ausführungsform des Blindniets, bei der der kegelstumpfförmige Abschnitt des Dornkopfes an seiner Stirnfläche koaxial ein kegelstumpfförmiges Zentrierelement aufweist.

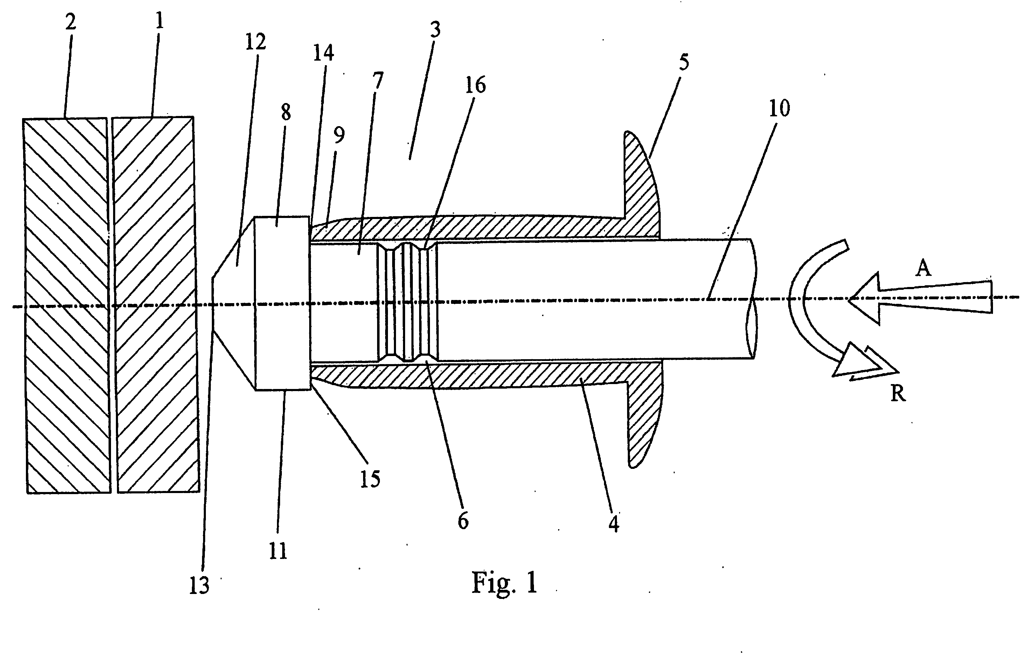

Aus Fig. 1 geht eine erste Ausführungsform eines Blindniets 3 zum erfindungsgemäßen Verbinden von Bauteilen 1 und 2 mit einseitiger Zugänglichkeit hervor, der eine einen Setzkopf 5 aufweisende Blindniethülse 4 und einen in deren Bohrung 6 koaxial geführten Nietdorn 7 auf weist, der am blindseitigen Ende 9 der Blindniethülse 4 einen Dornkopf 8 mit einem zylindrischen, zur Längsachse 10 des Nietdorns 7 symmetrischen Abschnitt 11 besitzt, dessen Durchmesser größer als der der Blindniethülse 4 ist und der in einen in Vorschubrichtung kegelstumpfförmigen Abschnitt 12 des Dornkopfes 8 mit zur Längsachse 11 des Nietdorns 7 senkrecht stehender Stirnfläche 13 übergeht. Das blindseitige Ende 9 der Blindniethülse 4 liegt mit seiner ringförmigen Stirnfläche 14 an der zur Stirnfläche 13 des kegelstumpfförmigen Abschnitts 12 des Dornkopfes 8 entgegengesetzten Stirnfläche 15 des zylindrischen Abschnitts 11 des Dornkopfes 8 an. Der Nietdorn 7 ist an seinem in der Blindniethülse 4 gelegenen Längenabschnitt mit einer Sollbruchstelle 16 versehen, und zwar vorzugsweise am Ende des in Vorschubrichtung vorderen Drittels seines in der Blindniethülse 4 gelegenen Längenabschnitts.

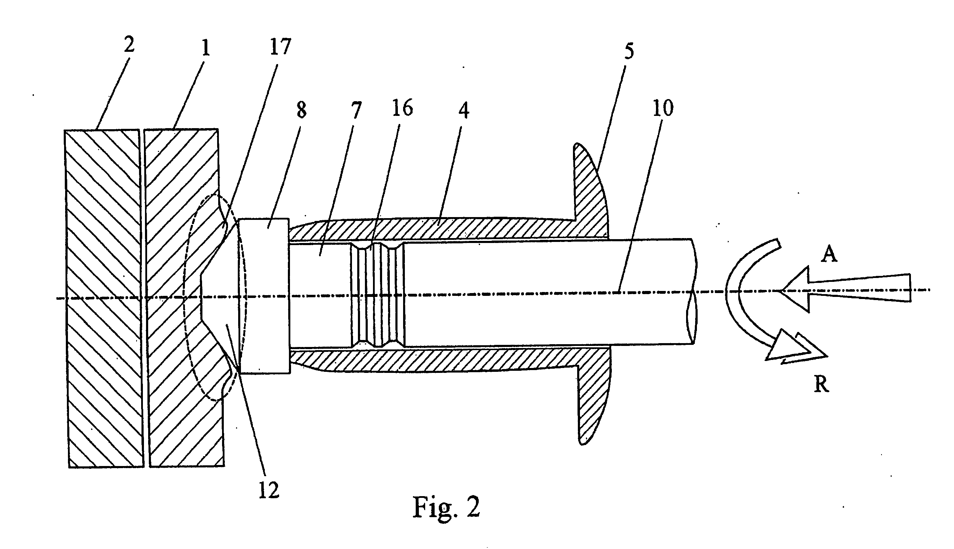

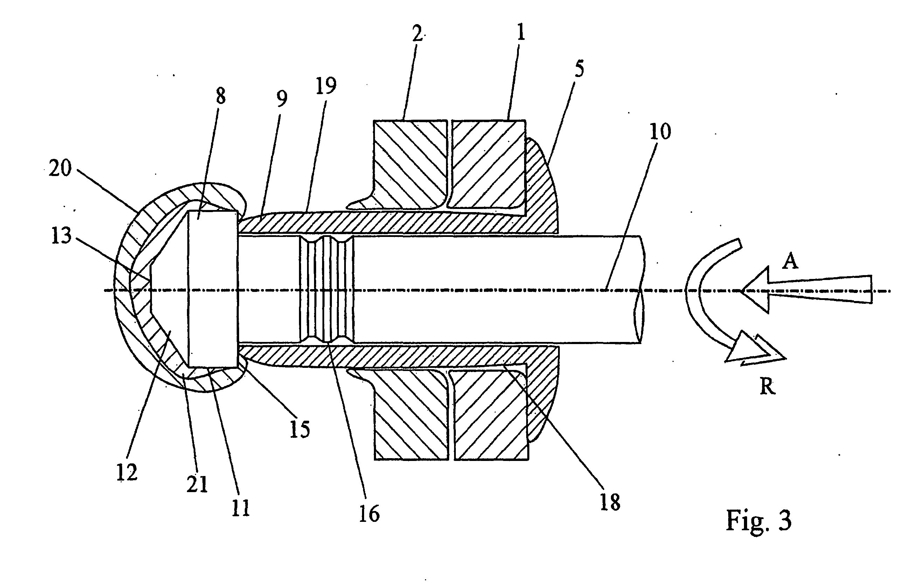

Bei einer ersten Verfahrensweise wird der gesamte Blindniet 3 mit einer Rotationsbewegung R und einer axial gerichteten Vorschubkraft A gegen das dem Dornkopf 8 zugewandte erste Bauteil 1 druckmäßig geführt. Hierbei erfolgt im Bearbeitungsbereich 17 des ersten Bauteils 1 durch die von der Rotationsbewegung R und der in Vorschubrichtung wirkenden Axialkraft des Dornkopfes 8 hervorgerufene Reibungs- und Umformarbeit ein Wärmeeintrag in den Bauteilwerkstoff, durch den dieser fließfähig gemacht wird, wie Fig. 2 verdeutlicht. Wie aus Fig. 3 hervorgeht, formt der rotierende Dornkopf 8 auf diese Weise weiterhin fortlaufend ein die Bauteile 1 und 2 durchsetzendes Fließloch 18, das von dem Blindniet 3 kontinuierlich spanlos durchdrungen wird, bis der Setzkopf 5 der Blindniethülse 4 an dem ersten Bauteil 1 zur Anlage kommt. Der beim Fließlochformen des Dornkopfes 8 von diesem verdrängte überflüssige Bauteilwerkstoff wird, wie Fig. 3 verdeutlicht, mit der Oberfläche des Dornkopfes 8 sowie dem Außenmantel 19 der Blindniethülse 4 an deren blindseitigen Ende 9 durch Reibungverschweißung kappenartig verbunden, und zwar derart, daß sich entsprechend den aus den Bauteilen 1 und 2 nacheinander beim Fließlochformen verdrängten überflüssigen Bauteilwerkstoffen zwei überlappenden Kappen 20 und 21 bilden, von denen die außen liegende Kappe 20 die rückwärtige ringförmige Stirnfläche 15 des Dornkopfes 8 gegen das Ende 9 der Blindniethülse 4 abdichtend übergreift.

Das abdichtende feste Verbinden der beiden einseitig zugänglichen Bauteile 1 und 2 miteinander erfolgt, indem der Nietdorn 4 aus der in Fig. 3 gezeigten Position durch eine Axialkraft B, die entgegengesetzt zu der den Setzkopf 5 der Blindniethülse 4 beaufschlagenden axialen Vorschubkraft A gerichtet wird, derart zurückgezogen wird, daß eine Verformung des blindseitigen Endes 9 der Blindniethülse 4 bis hin zum Bruch des Nietdorns 7 an seiner Sollbruchstelle 16 erfolgt. Der abgebrochene Restnietdorn 22 wird dann aus dem offenen Ende 23 der Blindniethülse 4 entfernt, während der Dornkopf 8 in der Verbindungsstelle der beiden Bauteile 1 und 2 verbleibt.

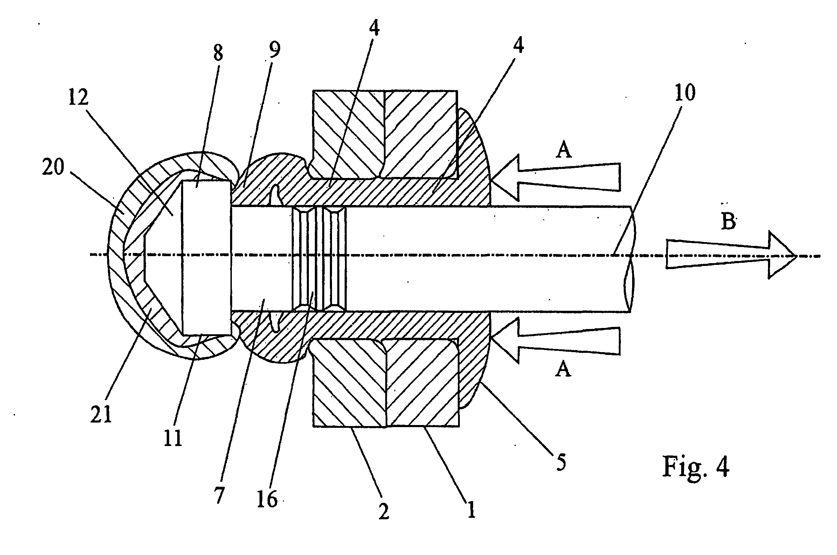

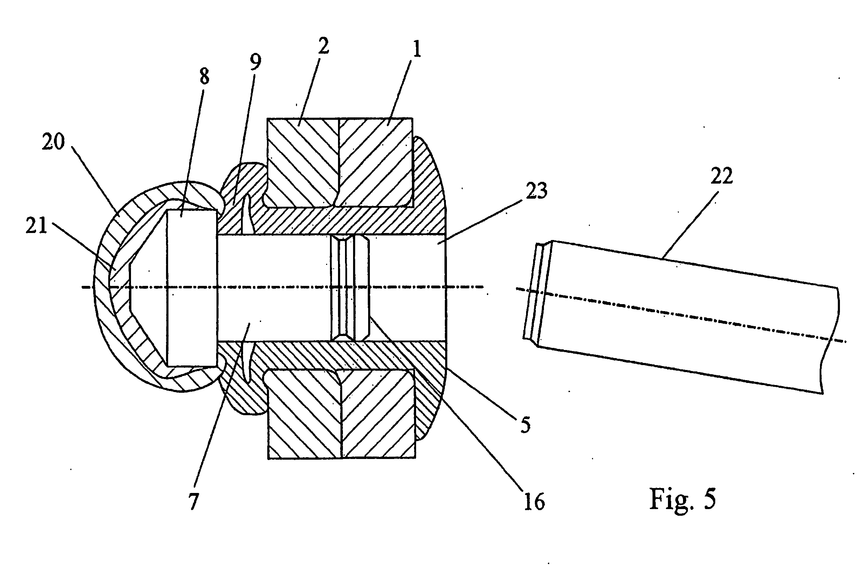

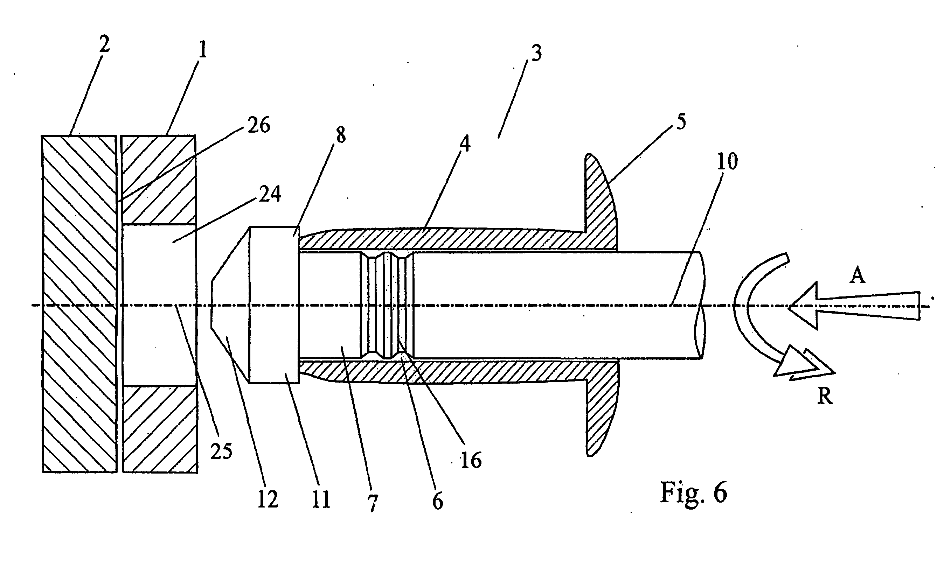

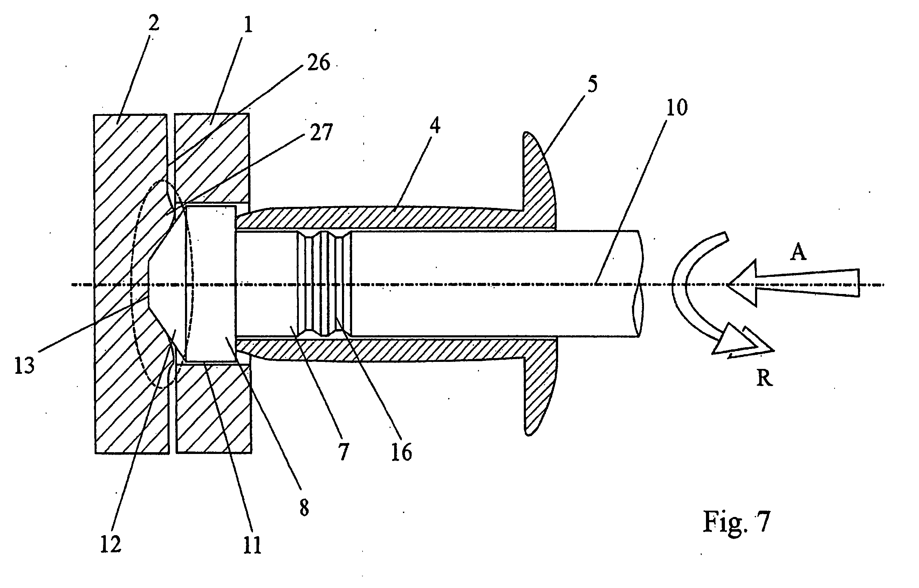

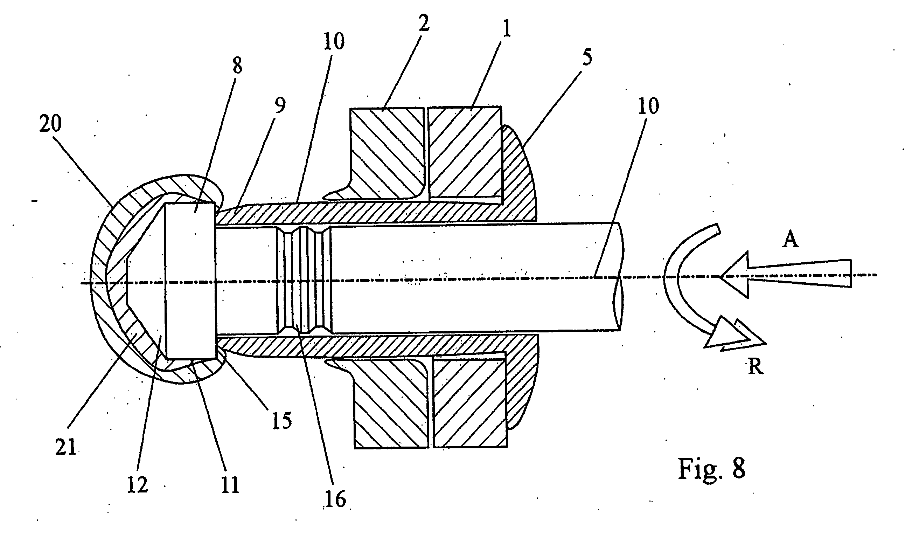

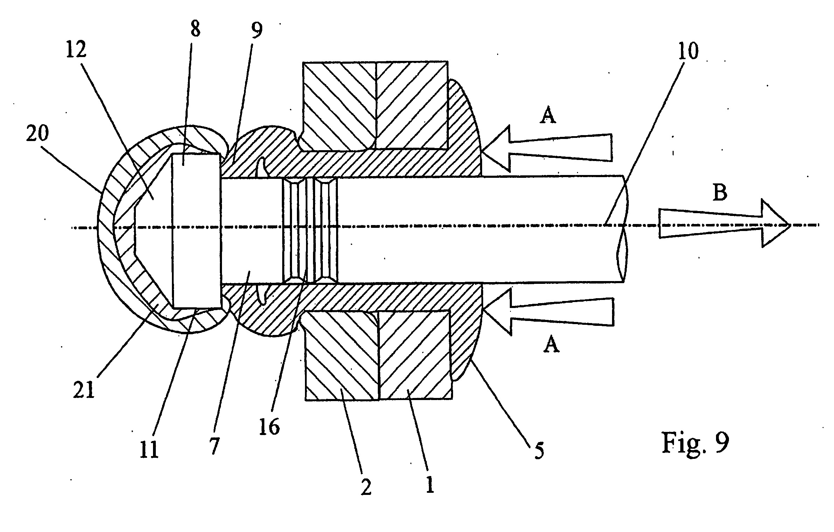

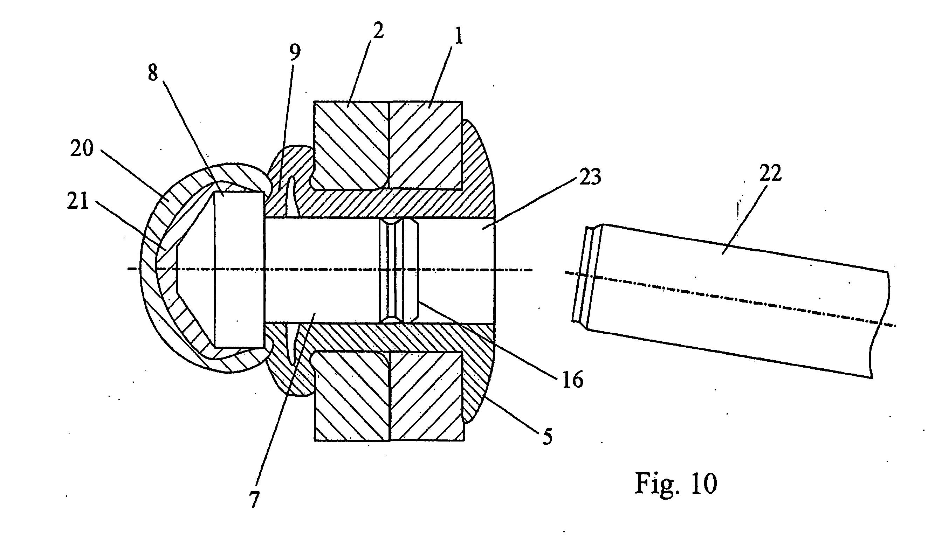

Aus den Fig. 6 bis 10 geht eine weitere Verfahrensweise hervor, die mit dem im Zusammenhang mit den Fig. 1 bis 5 beschriebene Verfahren zum Verbinden von Bauteilen mit einseitiger Zugänglichkeit bis auf den Unterschied übereinstimmt, daß, wie Fig. 6 zeigt, das dem Dornkopf 8 des Nietdorns 7 des Blindniets 3 zugewandte erste Bauteil 1 mit einer Vorlochung 24 versehen worden ist, deren Durchmesser geringfügig größer als der Durchmesser des zylindrischen Abschnitts 11 des Dornkopfes 8 ist. Bei dieser Verfahrensweise wird, wie aus den Fig. 6 und 7 hervorgeht, die Längsachse 10 des Blindniets 3 in Bezug auf die Mittellinie 25 der Vorlochung 24 des ersten Bauteils 1 fluchtend ausgerichtet und der Dornkopf 8 des in Drehung versetzten Blindniets 3 dann zielgerichtet durch die Vorlochung 24 des ersten Bauteils 1 geführt und durch die axialgerichtete Vorschubkraft A gegen die dem Bauteil 1 zugewandte Fläche 26 des zweiten Bauteils 2 gedrückt. Hierbei erfolgt im Bearbeitungsbereich 27 des zweiten Bauteils 2 durch die Reibungs- und Umformarbeit, die infolge der Rotationsbewegung des Dornkopfes 8 und die in Vorschubrichtung wirkende Axialkraft des Dornkopfes 8 entsteht, ein Wärmeeintrag in den zweiten Bauteils 2 , durch den der Bauteilwerkstoff fließfähig gemacht wird. Der weitere Ablauf des abdichtend festen Verbindens der beiden Bauteile 1 und 2 entspricht dann der in Bezug auf die Fig. 3 bis 5 beschriebenen Verfahrensweise.

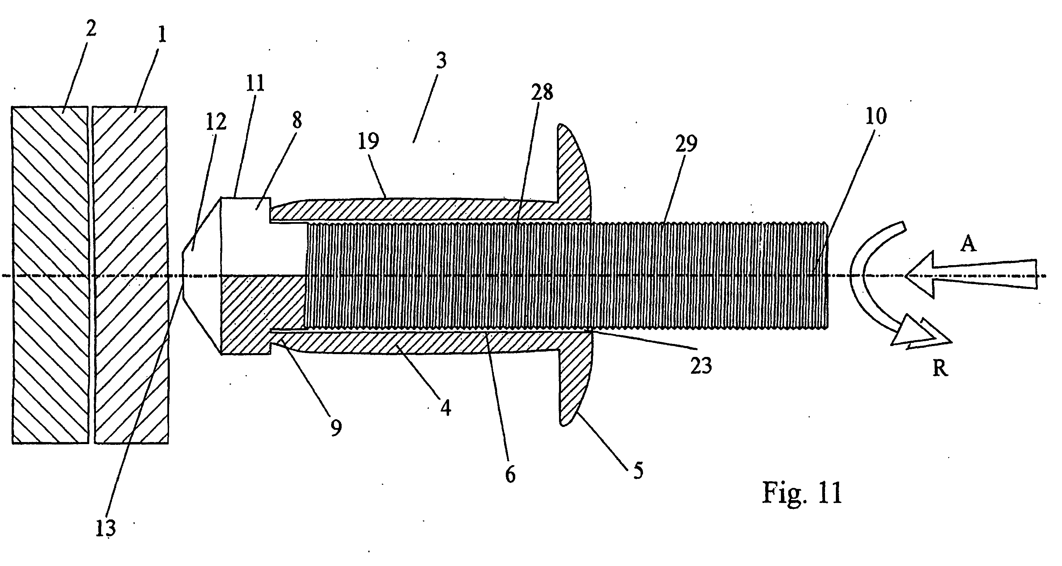

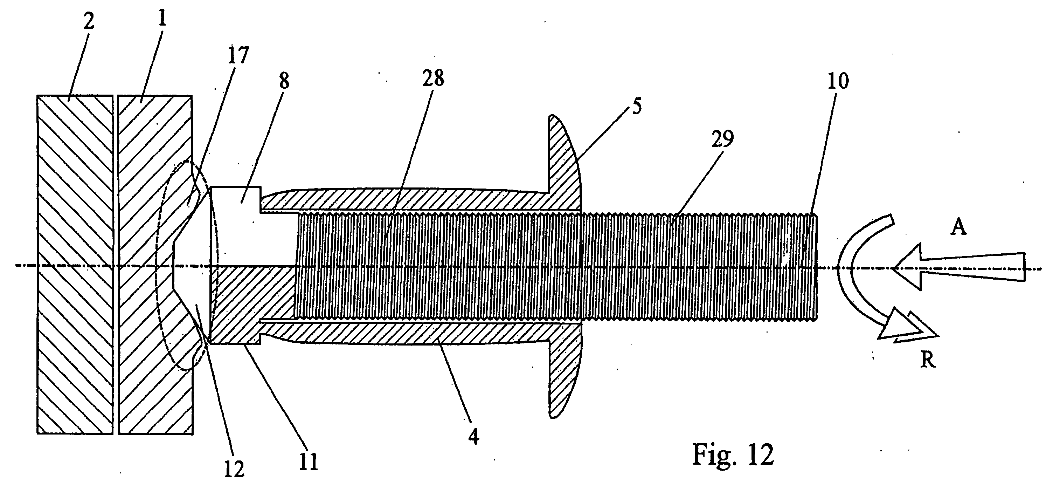

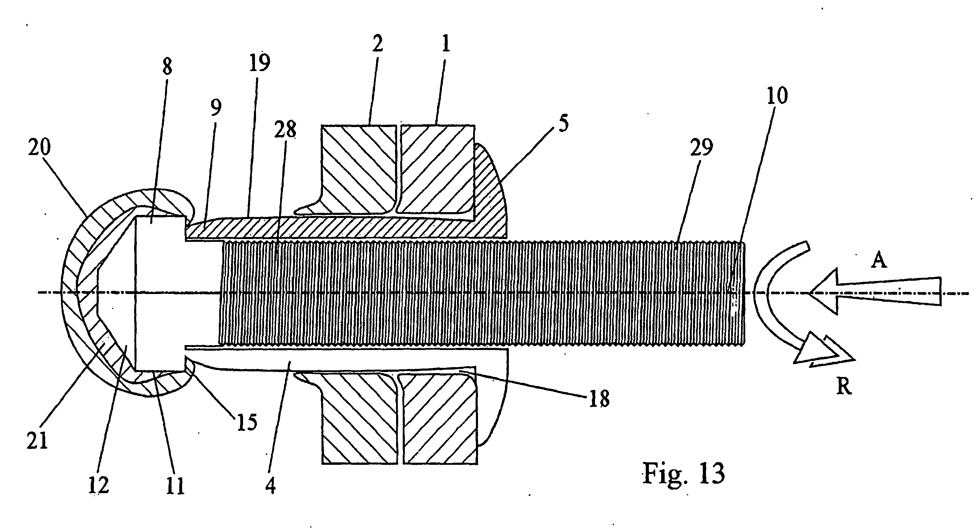

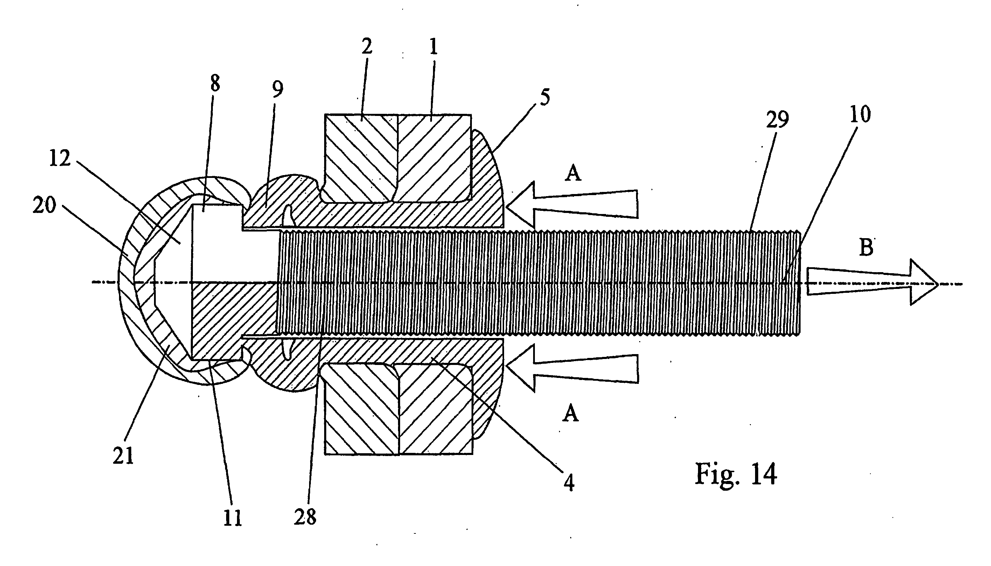

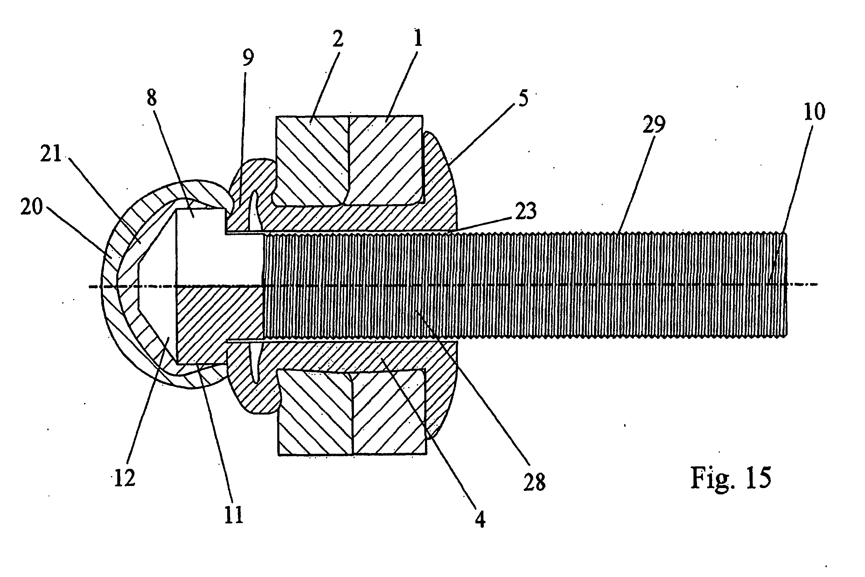

Aus den Fig. 11 bis 15 geht eine andere Ausführungsform des Blindniets 3 zum Verbinden der Bauteile 1 und 2 mit einseitiger Zugänglichkeit gemäß der Verfahrensweise nach den Fig. 1 bis 5 hervor, wobei der Blindniet 3 anstelle des Nietdorns 7 nach den Fig. 1 bis 10 einen Blindnietgewindebolzen 28 aufweist, der in der Blindniethülse 4 geführt ist und einen Dornkopf 8 aufweist, der, wie aus der oberen Hälfte der Schnittansicht nach Fig. 11 hervorgeht, identisch wie der Dornkopf 8 des Nietdorns 7 nach den Fig. 1 bis 10 ausgebildet ist. In der unteren Hälfte der Schnittansicht nach Fig. 11 ist eine Variante der Ausführungsform des Blindniets 3 nach den Fig. 11 bis 15 dargestellt, bei der die Blindniethülse 4 und der Blindnietgewindebolzen 28 an dessen Dornkopf 8 stofflich miteinander verbunden sind, damit z.B. eine absolute Dichtigkeit möglich ist.

Die den Fig. 11 bis 15 entnehmbare Verfahrensweise zum Verbinden der beiden Bauteile 1 und 2 mit einseitiger Zugänglichkeit entspricht dem Prinzip des Fließlochblindnietens nach den Fig. 1 bis 5 mit dem Unterschied, daß sich nach dem abgedichtend festen Verbinden der beiden Bauteile 1 und 2 durch den Blindniet 3 der Blindnietgewindebolzen 28 weiterhin aus dem offenen rückwärtigen Ende 23 der Blindniethülse 4 erstreckt und für Montagezwecke verfügbar ist.

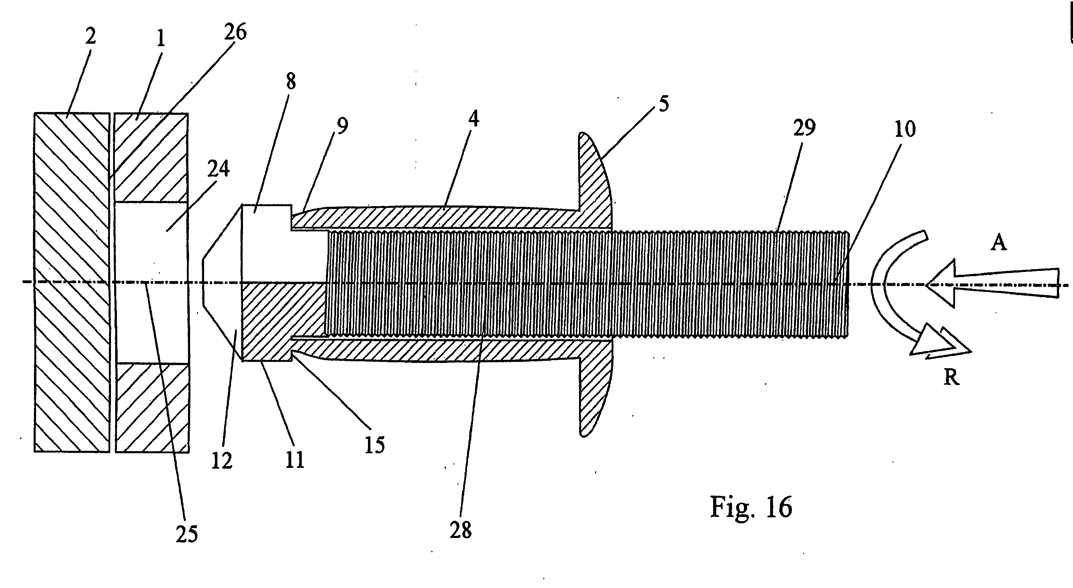

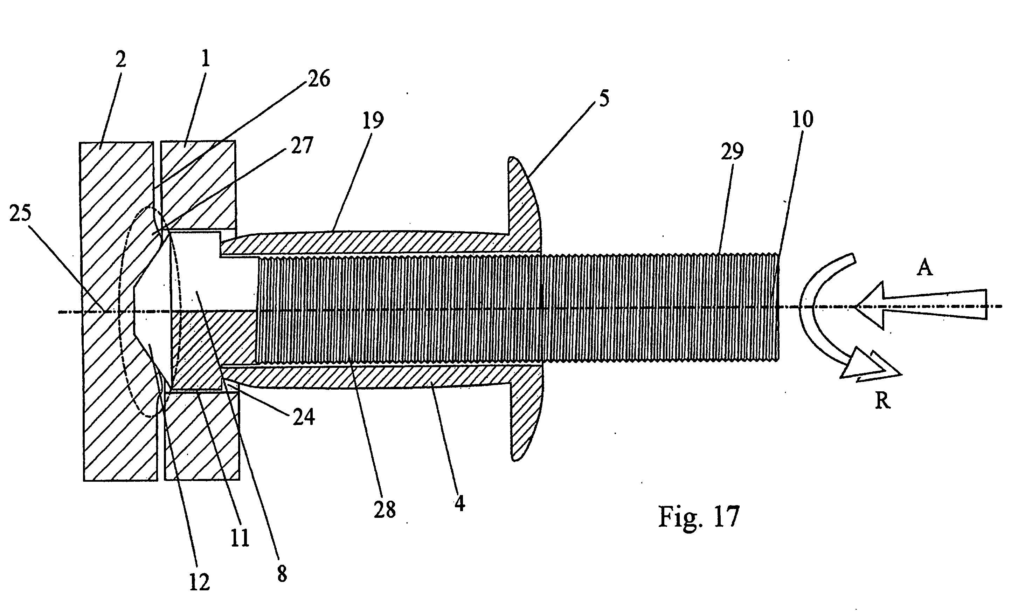

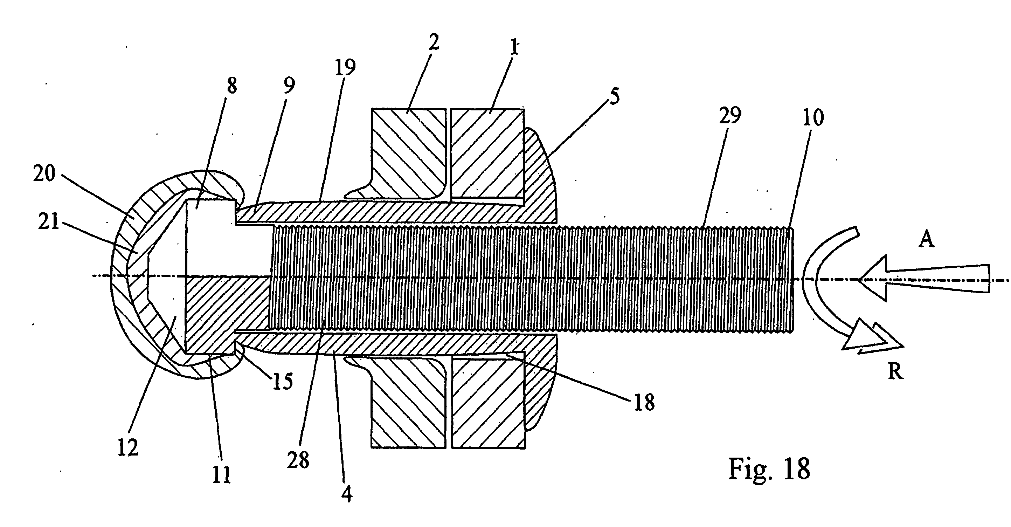

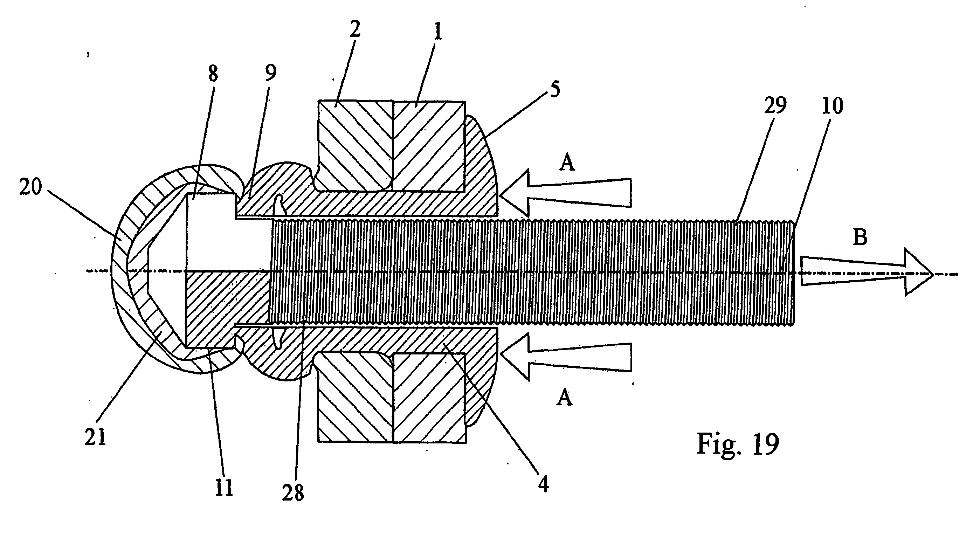

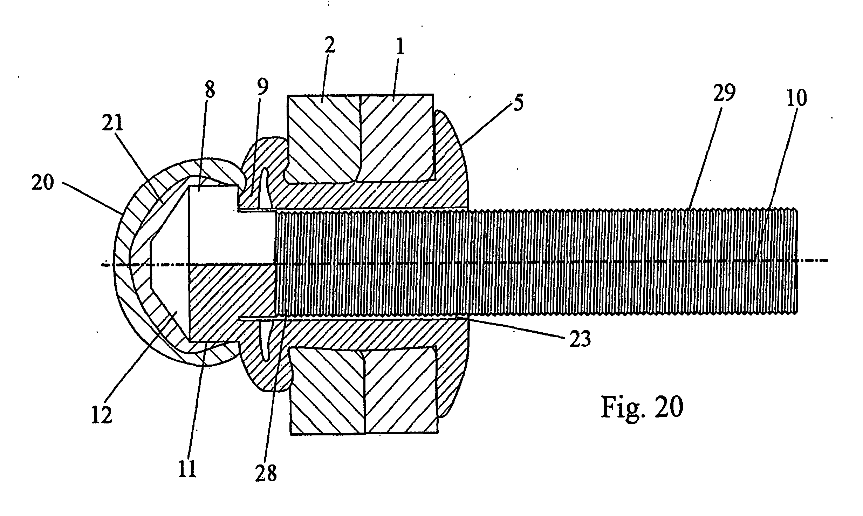

Aus den Fig. 16 bis 20 ist eine vierte Ausführungsform des Verfahrens zum Verbinden der beiden Bauteile 1 und 2 mit einseitiger Zugänglichkeit ersichtlich, die der Verfahrensweise nach den Fig. 6 bis 10 dahingehend enstpricht, daß das dem Blindniet 3 zugewandte Bauteil 1 mit der entsprechenden Vorlochung 24 versehen wird und der in Drehung versetzte Blindniet 3 mit dem Dornkopf 8 zielgerichtet durch dieses Vorlochung 24 geführt wird. Im Unterschied zu dem Blindniet 3 nach den Fig. 6 bis 10 ist nach den Fig. 16 bis 20 der Blindniet 3 entsprechend der Ausführungsform nach den Fig. 11 bis 15 mit dem Blindnietgewindebolzen 28 versehen. Die Verfahrensweise des Blindnietens mittels des Blindnietgewindebolzens 28 erfolgt entsprechend dem zuvor beschriebenen Ablauf des Fließlochblindnietens mit vorgelochtem Bauteil 1, wobei nach abgedichtend festen Verbinden der beiden Bauteile 1 und 2 der Blindnietgewindbolzen 28 mit seiner gesamten Länge erhalten bleibt und mit seinem sich aus dem offenen rückwärtigen Ende 23 der Blindniethülse 4 erstreckenden Längenabschnitt 29 für Montagezwecke verfügbar ist.

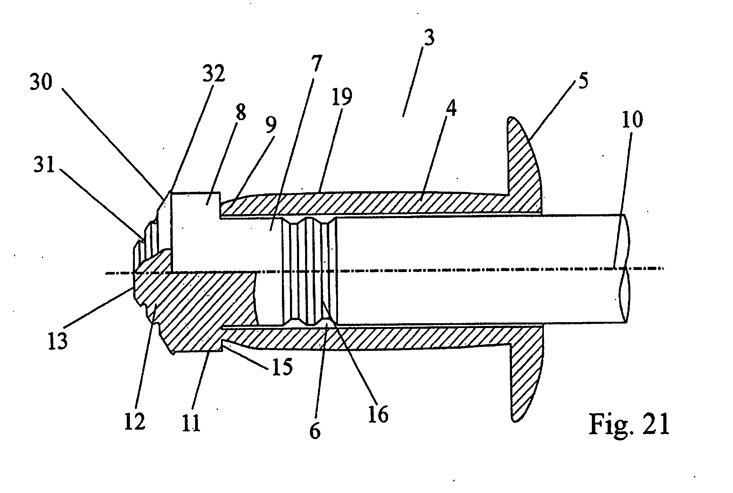

Aus Fig. 21 geht eine abgeänderte Ausführungsform des Blindniets 3 nach Fig. 1 zum Verbinden der beiden Bauteile 1 und 2 mit einseitiger Zugänglichkeit hervor, bei der der Mantel 30 des kegelstumpfförmigen Abschnitts 12 des Dornkopfes 8 mit umlaufenden, zur Stirnfläche 13 des Dornkopfes 8 parallel verlaufenden Nuten 31 versehen ist. Weiterhin kann der kegelstumpfförmige Abschnitt 12 des Dornkopfes 8 an seinem Übergang zu dem zylindrischen Abschnitts 11 des Dornkopfes 8 so ausgelegt sein, daß ein gegenüber dem zylindrischen Abschnitt 12 radial vorspringender Absatz 32 gebildet ist, wie in Fig. 21 zu erkennen ist. In der unteren Hälfte der Schnittansicht nach Fig. 21 ist ferner dargestellt, daß die Blindniethülse 4 und der Nietdorn 7 auch bei dieser Ausführungsform des Blindniets 3 stofflich miteinander verbunden sein können, damit z.B. absolute Abdichtung möglich ist.

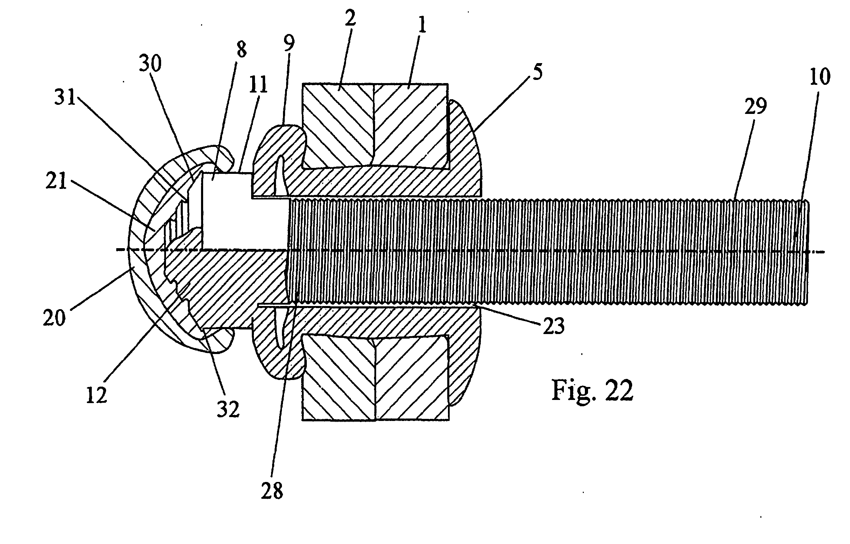

Fig. 22 zeigt eine andere Ausführungsform des Blindniets 3 mit in der Blindniethülse 4 geführtem Blindnietgewindebolzen 28 während des Stauchens des blindseitigen Endes 9 der Blindniethülse 4 zum Vernieten der beiden Bauteile 1 und 2, wobei entsprechend der Fig. 21 im Mantel 30 des kegelstumpfförmigen Abschnitts 12 des Dornkopfes 8 umlaufende, zur Stirnfläche 13 des Dornkopfes 8 parallele Nuten 31 vorgesehen sind und am Übergang des kegelstumpfförmigen Domkopfabschnitts 12 zum zylindrischen Dornkopfabschnitt 11 ein radial vorspringender Absatz 32 ausgebildet ist. In der unteren Hälfte der Schnittansicht nach Fig. 22 ist ebenfalls als Alternative die stoffliche Verbindung von Blindniethülse 4 und Blindnietgewindebolzen 28 dargestellt.

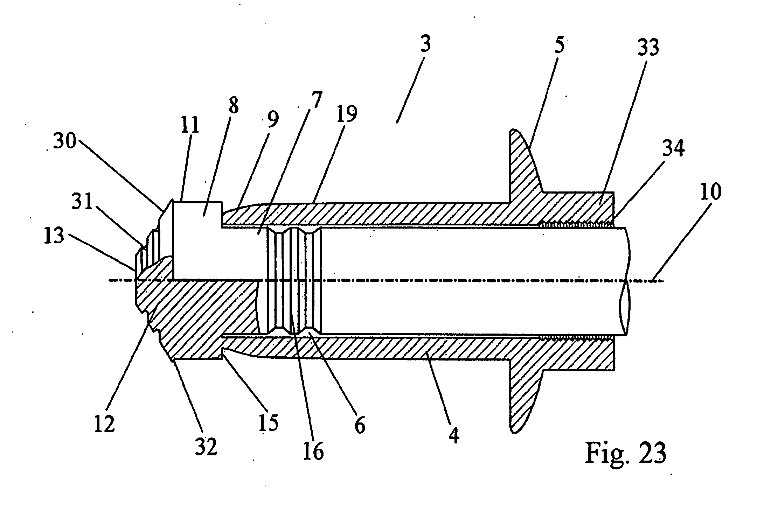

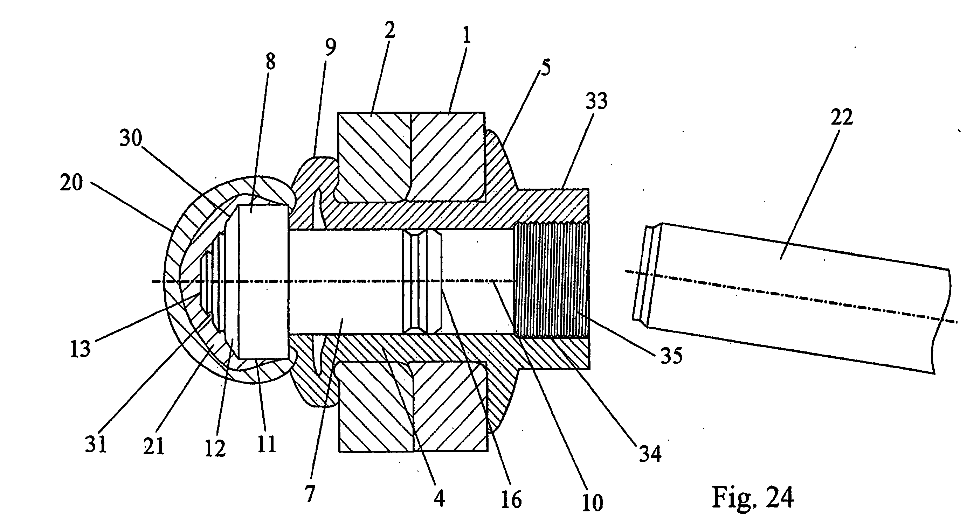

Aus Fig. 23 geht eine weitere Ausführungsform des Blindniets 3 mit setzkopfseitig der Blindniethülse 4 einstückig mit dieser ausgebildeter Blindnietmutter 33 als Funktionselement hervor. Entsprechend der Fig. 21 sind auch hier der in der Blindniethülse 4 geführte Nietdorn 7 mit einer in letzterer liegenden Sollbruchstelle 16 und der kegelstumpfförmige Abschnitt 12 des Dornkopfes 8 des Nietdorns 7 mit umlaufenden Nuten 31 ausgebildet, wobei mindestens eine Kante jeder Nut 31 parallel zur Stirnfläche 13 des Dornkopfes 8 verläuft und am Übergang des kegelstumpfförmigen Dornkopfabschnittes 12 zum zylindrischen Dornkopfabschnitt 11 ein radial vorstehender Absatz 32 vorgesehen ist. In der unteren Hälfte der Schnittansicht nach Fig. 23 ist zudem die Alternative der stofflichen Verbindung von Blindniethülse 4 und Netdorn 7 gezeigt. Wie aus Fig. 24 hervorgeht, die den Blindniet 3 in der Ausführungsform als Blindnietmutter 35 nach Fig. 23 in der die beiden Bauteile 1 und 2 abdichtend miteinander verbindenden Position zeigt, ist nach Stauchung des blindseitigen Endes 9 der Blindniethülse 4 bis hin zum Bruch des Nietdorns 7 an seiner in der Blindniethülse 16 liegenden Sollbruchstelle 16 und nach Entfernen des Restnietdorns 22 aus der Blindniethülse 4 das Innengewinde 34 der setzkopfseitigen Bohrung 35 der Blindnietmutter 33 für Montagezwecke z.B. mittels eines nicht dargestellten Gewindebolzens verfügbar.

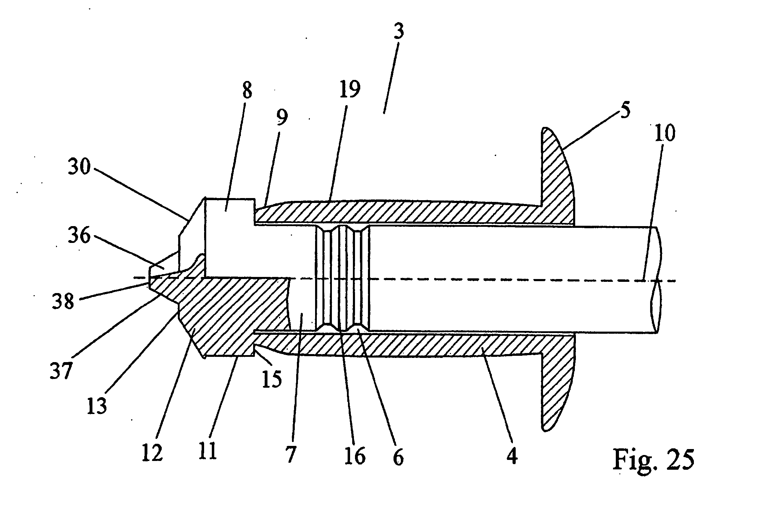

Bei einer weiteren, in Fig. 25 gezeigten Ausführungsform des Blindniet 3, die sich insbesondere bei der Blindvernietung einseitig zugänglicher Bauteile aus Aluminium als günstig erwiesen hat, ist auf der Stirnfläche 13 des kegelstumpfförmigen Dornkopfabschnittes 12 koaxial ein sich in Vorschubrichtung erstreckendes kegelstumpfförmiges Zentrierelement 36 mit verhältnismäßig kleinem Basisdurchmesser vorgesehen. Beim Vorschub des rotierenden Dornkopfes 8 des Blindniets 3 gegen die zugewandte Fläche eines der zuverbindenden Bauteile weicht die das 6 Bauteil zuerst kontaktierende Stirnfläche 38 des spitzenartigen Zentrierelements 36 den Bauteilwerkstoff quasi brennpunktartig auf und gewährleistet somit einen fließenden Übergang zum nachfolgenden Ansatz der Stirnfläche 13 des kegelstumpfförmigenm Abschnitts 12 des rotierenden Dornkopfs 8 im Bearbeitungsbereich des Bauteils und damit in optimaler Weise die überraschend gratlose Fließlochausbildung in den zu verbindenden Bauteilen.

### Bezugszeichenliste:

- 1: Bauteil
- 2: Bauteil
- 3: Blindniet
- 4: Blindniethülse
- 5: Setzkopf
- 6: Bohrung
- 7: Nietdorn
- 8: Dornkopf
- 9: blindseitige Ende der Blindniethülse
- 10: Längsachse des Nietdorns bzw. des Blindniets
- 11: zylindrischer Abschnitt des Dornkopfes
- 12: kegelstumpfförmiger Abschnitt des Dornkopfes
- 13: Stirnfläche des kegelstumpfförmigen Abschnitts des Dornkopfes
- 14: ringförmige Stirnfläche des blindseitigen Endes der Blindniethülse
- 15: rückwärtige Stirnfläche des zylidrischen Abschnitts des Dornkopfes
- 16: Sollbruchstelle des Nietdorns
- 17: Bearbeitungsbereich im ersten Bauteil
- 18: Fließloch
- 19: Außenmantel der Blindniethülse
- 20: äußere Kappe
- 21: innere Kappe
- 22: Restnietdorn
- 23: offene Ende der Blindniethülse
- 24: Vorlochung
- 25: Mittellinie der Vorlochung
- 26: Fläche des zweiten Bauteils
- 27: Bearbeitungsbereich im zweiten Bauteil
- 28: Blindnietgewindebolzen
- 29: Längenabschnitt des Blindnietgewindebolzens
- 30: Mantel des kegelstumpfförmigen Dornkopfabschnitts
- 31: Nuten
- 32: Absatz
- 33: Blindnietmutter
- 34: Innengewinde der Blindnietmutter
- 35: Öffnung der Blindnietmutter
- 36: Zentrierelement
- 37: Mantel des Zentrierelementes
- 38: Stirnfläche des Zentrierelementes
- A: axiale Vorschubkraft
- B: entgegengesetzte Axialkraft
- R: Rotationsbewegung

## Patentansprüche

1. Verfahren zum Verbinden von Bauteilen (1;2) mit einseitiger Zugänglichkeit unter Verwendung eines Blindniets (3) mit einer einen Setzkopf (5) aufweisenden Blindniethülse (4) und einem in deren Bohrung (6) koaxial geführten Nietdorn (7), der am blindseitigen Ende (9) des Blindniets (3) einen Dornkopf (8) aufweist, dessen Durchmesser größer als der der Blindniethülse (4) ist,
**gekennzeichnet durch die Kombination folgender Verfahrensschritte,**
- der Dornkopf (8) des Nietdorns (7) wird derart ausgebildet, daß ein am blindseitigen Ende (9) der Blindniethülse (4) angeordneter zylindrischer, zur Längsachse (10) des Nietdorns (7) symmetrischen Dornkopfabschnitt (11), dessen Durchmesser größer als der der Blindniethülse (4) ist, in einen in Vorschubrichtung des Blindniets (3) kegelstumpfförmigen Dornkopfabschnitt (12) übergeht,
- der gesamte Blindniet (3) wird um seine Längsachse (10) in Drehung versetzt und zugleich mit der Stirnfläche (13) des kegelstumpfförmigen Abschnitts (12) des rotierenden Dornkopfes (8) mit einer axial gerichteten Vorschubkraft (A) gegen das dem Dornkopf (8) zugewandte Bauteil (1) gedrückt, wobei der Bauteilwerkstoff im Bearbeitungsbereich (19) des ersten Bauteils (1) erwärmt und fließfähig gemacht wird,
- der rotierende Dornkopf (8) fortlaufend ein die beiden Bauteile (1; 2) durchsetzendes Fließloch (20) formend den überflüssigen Bauteilwerkstoff (12) aus dem Fließloch (20) verdrängt, der dabei mit dem Dornkopf (8) kappenartig verbunden wird, der Blindniet (3) spanlos die zu verbindenden Bauteile (1; 2) durchdringt, bis der Setzkopf (5) der Blindniethülse (4) an dem Bauteil (1) zur Anlage kommt, und der sich mit dem Dornkopf (8) kappenartig verbindende überflüssige Bauteilwerkstoff (12) den Dornkopf (8) übergreift und sich abdichtend mit dem blindseitigen Ende (9) der Blindniethülse (4) verbindet,
- worauf der Nietdorn (7) **durch** eine zur axial gerichteten Vorschubkraft (A) entgegengesetzt gerichtete Axialkraft (B) zurückgezogen und die Blindniethülse (4) blindseitig dabei derart gestaucht wird, daß die Bauteile (1; 2) **durch** den Blindniet (3) abdichtend fest miteinander verbunden werden und der Dornkopf (8) in der Verbindungsstelle der beiden Bauteile (1;2) verbleibt.

2. Verfahren nach Anspruch 1, **dadurch gekennzeichnet, daß** der bei der Fließlochformung des rotierenden Dornkopfes (8) von diesem aus dem Fließloch (20) verdrängte überflüssige Bauteilwerkstoff mit dem Dornkopf (8) kaltverschweißt und/oder mechanisch formschlüssig verbunden wird.

3. Verfahren nach einem der Ansprüche 1 und 2, **dadurch gekennzeichnet, daß** ein Nietdorn (7) verwendet wird, der eine innerhalb der Blindniethülse (4) gelegene Sollbruchstelle (16) aufweist, und daß die Stauchung des blindseitigen Endes (9) der Niethülse (4) durch die Einwirkung der den Setzkopf (5) der Blindniethülse (4) beaufschlagenden axial gerichteten Vorschubkraft (A) und der zu letzterer entgegengesetzten, am Nietdorn (7) angreifenden Axialkraft (B) bis hin zum Bruch der Sollbruchstelle (16) des Nietdorns (7) erfolgt, worauf der Restnietdorn (22) aus dem offenen Ende (23) der Blindniethülse (4) entfernt wird, während der Dornkopf (8) in der abgedichteten festen Verbindungsstelle der beiden Bauteile (1; 2) verbleibt.

4. Verfahren nach einem der Ansprüche 1 und 2, **dadurch gekennzeichnet daß** ein Blindniet (3) verwendet wird, bei dem der Nietdorn (7), als ein in der Bohrung (6) der Blindniethülse (4) koaxial geführter Blindnietgewindebolzen (28) ausgestaltet ist, dessen Dornkopf (8) nach dem Blindnieten der beiden Bauteile (1; 2) in deren Verbindungsstelle verbleibt und der sich weiterhin aus dem offenen Ende (9) der Blindniethülse (4) erstreckt und für Montagezwecke verfügbar ist..

5. Verfahren nach einem der Ansprüche 1 bis 3, **dadurch gekennzeichnet, daß** ein Blindniet (3) verwendet wird, dessen Blindniethülse (4) setzkopfseitig in Form einer Blindnietmutter (33) ausgebildet ist, deren Innengewinde (34) nach Vollendung der abdichtend festen Verbindung der beiden Bauteile (1) und (2) und nach Entfernen des beim Stauchen des blindseitigen Endes der Blindniethülse (4) an der Sollbruchstelle (16) des Nietdorns (7) abgetrennten Restnietdorns (22) aus dem setzkopfseitigen offenen Ende (23) der Blindniethülse (4) für Montagezwecke verfügbar ist.

6. Verfahren nach einem der Ansprüche 1 bis 5 , **dadurch gekennzeichnet, daß** mindestens ein mit einer Vorlochung oder Vorstanzung (24) ausgebildetes Bauteil (1; 2) verwendet wird, durch die der rotierende Blindniet (3) zielgerichtet hindurch geführt wird, bis die plane Stirnfläche (13) des kegelstumpfförmigen Abschnitts (12) des rotierenden Dornkopfes (8) des Nietdorns (7) bzw. des Blindnietgewindebolzens (28) gegen die dem Dornkopf (8) zugewandte Fläche (26) des zweiten Bauteils (2) gedrückt wird.

7. Verfahren nach einem der Ansprüche 1 bis 6, **dadurch gekennzeichnet, daß** die Geometrie des Dornkopfes (8) sowie die auf den Blindniet (3) ausgeübte axialgerichtete Vorschubkraft (A) und die Rotationsgeschwindigkeit (R) des Dornkopfes (8) so auf einander abgestimmt werden, daß der vom Dornkopf (8) beim Fließlochformen verdrängte überflüssige Bauteilwerkstoff und der Dornkopf (8) eine mechanische formschlüssige Verbindung eingehen.

8. Verfahren nach einem der Ansprüche 1 bis 6, **dadurch gekennzeichnet, daß** der beim Fließlochformen des Dornkopfes (8) des Nietdorns (3) bzw. des Blindnietgewindebolzens (28) verdrängte überflüssige Bauteilwerkstoff an der Oberfläche (11, 12, 13) des Dornkopfes (8) kappenartig kaltverschweißt wird.

9. Verfahren nach Anspruch 1 bis 8, **dadurch gekennzeichnet, daß** der Mantel (30) des kegelstumpfförmigen Abschnitts (12) des Dornkopfes (8) des Nietdorns (7) bzw. des Blindnietgewindebolzens (28) mit umlaufenden Nuten (31) versehen wird, in denen der vom Dornkopf (8) beim Fließlochformen verdrängte überflüssige Bauteilwerkstoff mechanisch formschlüssig mit dem Dornkopf (8) verbunden wird.

10. Verfahren nach Anspruch 9, **dadurch gekennzeichnet, daß** die umlaufenden Nuten (31) am Mantel (30) des kegelstumpfförmigen Abschnitts (12) des Dornkopfes (8) so ausgebildet werden, daß mindestens eine Kante jeder Nut (31) parallel zur Stirnfläche (13) des kegelstumpfförmigen Abschnitts (13) des Dornkopfes (8) verläuft.

11. Verfahren nach einem der vorhergehenden Ansprüche 1 bis 10, **dadurch gekennzeichnet, daß** die Blindniethülse (4) an ihrem blindseitigen Ende (9) mit dem Nietdorn (7) bzw. dem Blindnietgewindebolzen (28) des Blindniets (3) stofflich verbunden wird

12. Verfahren nach einem der Ansprüche 1 bis 11, **dadurch gekennzeichnet, daß** ein Blindniet (3) verwendet wird, bei dem auf der Stirnfläche (13) des kegelstumpfförmigen Abschnitts (12) des Dornkopfes (8) des Nietdorns (7) bzw. des Blindnietgewindebolzens (28) koaxial ein kegelstumpfförmiges Zentrierelement (36) mit verhältnismäßig kleinem Basisradius als Aufsatzspitze des Dornkopfes (8) ausgebildet ist.

13. Verfahren nach einem der Ansprüche 1 bis 12, **dadurch gekennzeichnet, daß** mehr als zwei Bauteile (1; 2) gleichzeitig mit einem Blindniet (3) verbunden werden.

14. Verbund von Bauteilen (1; 2) mit einseitiger Zugänglichkeit und einem die Bauteile verbindend durchsetzenden Blindniet (3), der eine einen Setzkopf (5) aufweisende Blindniethülse (4) und einen in deren Bohrung (6) koaxial geführtem Nietdorn (7) aufweist, der am blindseitigen Ende (9) des Blindniets (3) einen Dornkopf (8) besitzt, dessen Durchmesser größer als der der Blindniethülse (4) ist, wobei
- die Blindniethülse (4) und der Nietdorn (4) gemeinsam um die Längsachse des Blindniets (3) in Drehung versetzbar und zugleich in Vorschubrichtung (A) des Blindniets (3) axial vortreibbar sind,
- der Dornkopf (8) des Nietdorns (7) am blindseitigen Ende (9) der Blindniethülse (4) einen zylindrischen, zur Längsachse (10) des Nietdorns (7) symmetrisch angeordneten Dornkopfabschnitt (11) aufweist, dessen Durchmesser größer als der der Blindniethülse (4) ist und der in einen in Vorschubrichtung (A) des Dornkopfes (8) kegelstumpfförmigen Dornkopfabschnitt (12) übergeht, dessen zur Längsachse (10) des Nietdorns (7) senkrecht verlaufende Stirnfläche (13) gegen die gegenüberliegende Fläche (26) des benachbarten Bauteils (1) beim axial gerichteten Vortrieb des Blindniets (3) rotierend drückbar ist,
- der Bauteilwerkstoff im Bearbeitungsbereich (17) des ersten Bauteils (1) erwärmbar und in fließfähigen Zustand versetzbar, ein die Bauteile (1; 2) durchsetzendes Fließloch (18) formbar und dabei der überflüssige Bauteilwerkstoff verdrängbar ist, der den Dornkopf (8) in Form einer Kappe übergreift und mit der Oberfläche des letzteren und dem Außenmantel (19) der Blindniethülse (4) des Blindniets (3), der durch das Fließloch (18) bis zum Anschlag des Setzkopfes (5) des Blindniets (3) an der Fläche des ersten Bauteils (1) rotierend vorgetrieben ist, am blindseitigen Ende der Blindniethülse (4) abdichtend verbindbar ist, und wobei
- der Nietdorn (7) mittels einer Axialkraft (B), die zu der axial gerichteten Vorschubkraft (A) entgegengesetzt gerichtet ist, relativ zur Blindniethülse (4) unter Stauchung des blindseitigen Endes (9) der Blindniethülse (4) bis zur Festsetzung des Dornkopfes (8) des Nietdorns (7) in der abgedichteten Verbindungsstellung der beiden Bauteile (1; 2) axial rückziehbar ist.

15. Verbund nach Anspruch 14, **dadurch gekennzeichnet, daß** der Nietdorn (7) an seinem in der Blindniethülse (4) befindlichen Längenabschnitt eine Sollbruchstelle (16) aufweist, deren Bruchfestigkeit im Maximum der Stauchung des Blindniets (3) überschritten ist.

16. Verbund nach Anspruch 14, **dadurch gekennzeichnet, daß** der Nietdorn (7) als ein in der Bohrung (6) der Blindniethülse (4) koaxial geführter Blindnietgewindebolzen (28) ausgestaltet ist, dessen Dornkopf (8) nach Setzen des Blindniets (3) in der Verbindungsstelle der Bauteile (1; 2) verbleibt, wobei der sich aus dem offenen Ende (23) der Blindniethülse (4) erstreckende Längenabschnitt (29) des Blindnietgewindebolzens (28) für Montagezwecke verfügbar ist.

17. Verbund nach einem der Ansprüche 14 und 15, **dadurch gekennzeichnet, daß** die Blindniethülse (4) des Blindniets (3) setzkopfseitig als Blindnietmutter (33) ausgebildet ist, deren Innengewinde (34) nach Blindvernietung der Bauteile (1;2) und nach Entfernung des Restnietdorns (22) aus der Öffnung (3 5) der Blindnietmutter (35) für Montagezwecke verfügbar ist.

18. Verbund nach einem der Ansprüche 14 bis 17, **dadurch gekennzeichnet, daß** in dem Mantel (32) des kegelstumpfförmigen Abschnittes (12) des Dornkopfes (8) des Nietdorns (7) bzw. des Blindnietgewindebolzens (28) Nuten (31) vorgesehen sind, in denen der vom Dornkopf (8) beim Fließlochformen verdrängte überflüssige Bauteilwerkstoff mechanisch formschlüssig mit dem Dornkopf (8) verbindbar ist.

19. Verbund nach Anspruch 8, **dadurch gekennzeichnet, daß** mindesten eine Kante jeder Nut (31) im Mantel (30) des kegelstumpfförmigen Abschnitts (12) des Dornkopfes (8) des Nietdorns (7) bzw. des Blindnietgewindebolzens (28) parallel zur Stirnfläche (13) des kegelstumpfförmigen Abschnitts (12) des Dornkopfes (8) verläuft.

20. Verbund nach einem der Ansprüche 14 bis 19, **dadurch gekennzeichnet, daß** auf der Stirnfläche (13) des kegelstumpfförmigen Abschnitts (12) des Dornkopfes (8) des Nietdorns (7) bzw. des Blindnietgewindebolzens (28) koaxial ein kegelstumpfförmiges Zentrierelement (36) mit verhältnismäßig kleinem Basisradius als Ansatzspitze des Dornkopfes (8) ausgebildet ist.

21. Verbund nach einem der Ansprüche 14, 15 und 17 bis 20, **dadurch gekennzeichnet, daß** die Blindniethülse (4) an ihrem blindseitigen Ende (9) mit dem Nietdorn (7) stofflich verbunden ist.

22. Verbund nach einem der Ansprüche 14, 16 und 18 bis 20, **dadurch gekennzeichnet, daß** die Blindniethülse (4) an ihrem blindseitigen Ende (9) mit dem Blindnietgewindebolzen (28) stofflich verbunden ist.

## Claims

1. A method for connecting components (1; 2) accessible only from one side using a blind rivet (3) comprising a blind rivet body (4) having a rivet head (5) and a rivet mandrel (7) guided coaxially into its hole (6), which has a mandrel head (8) at the blind end (9) of the blind rivet (3), the diameter of said mandrel head being greater than that of the blind rivet body (4), **characterised by** the following combination of process steps:
- the mandrel head (8) of the rivet mandrel (7) is embodied such that a cylindrical mandrel head section (11) arranged at the blind end (9) of the blind rivet body (4), symmetrical to the longitudinal axis (10) of the rivet mandrel (7), whose diameter is larger than that of the blind rivet body (4), goes over into a truncated-cone-shaped mandrel head section (12) in the direction of displacement of the blind rivet (3),
- the entire blind rivet (3) is set in rotation about its longitudinal axis (10) and is at the same time pressed with the front face (13) of the truncated-cone-shaped section (12) of the rotating mandrel head (8) against the component (1) facing the mandrel head (8) with the axially directed feed force (A), wherein the component material in the processing region (19) of the first component (1) is heated and made liquid,
- the rotating mandrel head (8) continuously displaces a flow hole (20) penetrating the two components (1; 2), forming the excess component material (12), which is in this case connected to the mandrel head (8) in a cap fashion, the blind rivet (3) penetrates the components (1; 2) to be joined without cutting until the rivet head (5) of the blind rivet body (4) comes to rest on the component (1), and the excess component material (12) connected to the mandrel head (8) in a cap fashion, overlaps the mandrel head (8) and becomes joined to the blind end (9) of the blind rivet body (4) in a sealing fashion,
- whereupon the rivet mandrel (7) is withdrawn by an axial force (B) oppositely directed to the axially directed feed force (A) and the blind rivet body (4) is compressed on the blind side such that the components (1; 2) are fixedly joined together by the blind rivet (3) in a sealing fashion and the mandrel head (8) remains at the joining point of the two components (1; 2).

2. The method according to claim 1, **characterised in that** the excess component material expelled from the flow hole (20) during flow punch forming of the rotating mandrel head (8) by said mandrel head is cold-welded with the mandrel head (8) and/or mechanically connected in positive contact.

3. The method according to any one of claims 1 and 2, **characterised in that** use is made of a rivet mandrel (7) which has a preset breaking point (16) located inside the blind rivet body (4) and that the compression of the blind end (9) of the rivet body (4) by the action of the axially directed feed force (A) acting upon the rivet head (5) of the blind rivet body (4) and the axial force (B) acting on the rivet mandrel (7) in the opposite direction to the latter takes place until the preset breaking point (16) of the rivet mandrel (7) ruptures whereupon the residual rivet mandrel (22) is removed from the open end of the blind rivet head (4) whilst the mandrel head (8) remains in the sealed fixed connecting point of the two components (1; 2).

4. The method according to any one of claims 1 and 2, **characterised in that** use is made of a blind rivet (3) wherein the rivet mandrel (7) is embodied as a blind-rivet threaded bolt (28) guided coaxially in the hole (6) of the blind rivet body (4) whose mandrel head (8) remains in the connecting point after blind riveting of the two components (1; 2) and which furthermore extends from the open end (9) of the blind rivet body (4) and is available for assembly purposes.

5. The method according to any one of claims 1 to 3, **characterised in that** use is made of a blind rivet (3) whose blind rivet body (4) is embodied in the form of a blind rivet nut (33) on the rivet head side, whose internal thread (34) is available for assembly purposes after the sealed fixed connection of the two components (1) and (2) has been completed and after the residual rivet mandrel (22) separated during compression of the blind end of the blind rivet body (4) at the preset breaking point (16) of the rivet mandrel (7) has been removed from the open end (23) of the blind rivet body (4) on the rivet head side.

6. The method according to any one of claims 1 to 5, **characterised in that** at least one component (1; 2) embodied with a pre-perforation or pre-punching (24) is used by which means the rotating blind rivet (3) is specifically guided until the plane front face (13) of the truncated-cone-shaped section (12) of the rotating mandrel head (8) of the rivet mandrel (7) or the blind rivet threaded bolt (28) is pressed against the face (26) of the second component (2) facing the mandrel head (8) .

7. The method according to any one of claims 1 to 6, **characterised in that** the geometry of the mandrel head (8) and the axially directed feed force (A) exerted on the blind rivet (3) and the rotational speed (R) of the mandrel head (8) are matched to one another such that the excess component material expelled from the mandrel head (8) during flow punch forming, and the mandrel head (8) form a mechanical form-locking connection.

8. The method according to any one of claims 1 to 6, **characterised in that** the excess component material expelled during flow punch forming of the mandrel head (8) of the rivet mandrel (3) or the blind-rivet threaded bolt (28) is cold-welded to the surface (11, 12, 13) of the mandrel head (8) in a cap fashion.

9. The method according to any one of claims 1 to 8, **characterised in that** the casing (30) of the truncated-cone shaped section (12) of the mandrel head (8) of the rivet mandrel (7) or of the blind-rivet threaded bolt (28) is provided with peripheral grooves (31) in which the excess component material expelled from the mandrel head (8) during flow punch forming is mechanically connected to the mandrel head (8) in a form-locking fashion.

10. The method according to claim 9, **characterised in that** the peripheral grooves (31) are formed on the casing (30) of the truncated-cone-shaped section (12) of the mandrel head (8) such that at least one edge of each groove (31) runs parallel to the front face (13) of the truncated-cone-shaped section (13) of the mandrel head (8).

11. The method according to any one of claims 1 to 10, **characterised in that** the blind rivet body (4) is material-connected to the rivet mandrel (7) or the blind-rivet threaded bolt (28) of the blind rivet (3) at its blind end (9).

12. The method according to any one of claims 1 to 11, **characterised in that** use is made of a blind rivet (3) wherein a truncated-cone-shaped centring element (36) with a relatively small base radius is embodied coaxially as the mounting tip of the mandrel head (8) on the front face (13) of the truncated-cone-shaped section (12) of the mandrel head (8) of the rivet mandrel (7) or the blind-rivet threaded bolt (28).

13. The method according to any one of claims 1 to 12, **characterised in that** more than two components (1; 2) can be joined with a blind rivet (3) at the same time.

14. An assembly of components (1; 2) accessible only from one side and a blind rivet (3) which penetrates through said components, thus joining them, comprising a blind rivet body (4) having a rivet head (5) and a rivet mandrel (7) guided coaxially into its hole (6), which has a mandrel head (8) at the blind end (9) of the blind rivet (3), the diameter of said mandrel head being greater than that of the blind rivet body (4), wherein
- the blind rivet head (4) and the rivet mandrel (7) can be jointly set in rotation about the longitudinal axis of the blind rivet and at the same time can be driven axially forward in the feed direction (A) of the blind rivet (3),
- the mandrel head (8) of the rivet mandrel (7) is embodied such that a cylindrical mandrel head section (11) arranged at the blind end (9) of the blind rivet body (4), symmetrical to the longitudinal axis (10) of the rivet mandrel (7), whose diameter is larger than that of the blind rivet body (4) and which goes over into a truncated-cone-shaped mandrel head section (12) in the feed direction (A) of the mandrel head (8), whose front face (13) running perpendicular to the longitudinal axis (10) of the rivet mandrel (7) is pressed in a rotating fashion against the opposite face (26) of the neighbouring component (1) during the axially directed advance of the blind rivet (3),
- the component material in the processing region (17) of the first component (1) is heated and made liquid, a flow hole (18) penetrating through the components (1; 2) is formed and the excess component material expelled, which covers the mandrel head (8) in the form of a cap and becomes joined in a sealing fashion to the surface of the latter and the outer casing (19) of the blind rivet body (4) of the blind rivet (3) which is advanced in a rotating fashion through the flow hole (18) until the rivet head (5) of the blind rivet (3) comes to rest on the surface of the first component (1), at the blind end of the blind rivet body (4), and wherein
- the rivet mandrel (7) is withdrawn axially by an axial force (B) which is oppositely directed to the axially directed feed force (A), relative to the blind rivet body (4) whilst compressing the blind end (9) of the blind rivet body (4) until the mandrel head (8) of the rivet mandrel (7) rests in the sealed joining point of the two components (1; 2).

15. The assembly according to claim 14, **characterised in that** the rivet mandrel (7) has a preset breaking point (16) in its longitudinal section located in the blind rivet body (4), whose breaking strength is exceeded at the maximum compression of the blind rivet (3).

16. The assembly according to claim 14, **characterised in that** the rivet mandrel (7) is embodied as a blind rivet threaded bolt (28) guided coaxially in the hole (6) of the blind rivet body (4), whose mandrel head (8) remains in the connecting point of the components (1; 2) after emplacing the rivet, wherein the longitudinal section (29) of the blind-rivet threaded bolt (28) extending from the open end (23) of the blind rivet body (4) remains available for assembly purposes.

17. The assembly according to any one of claims 14 and 15, **characterised in that** the blind rivet body (4) of the blind rivet (3) is embodied as a blind rivet nut (33) on the mandrel head side, whose internal thread (34) is available for assembly purposes after blind riveting of the components (1; 2) and removal of the residual rivet mandrel (22) from the opening (35) of the blind rivet nut (35).

18. The assembly according to any one of claims 14 to 17, **characterised in that** grooves (31) are provided in the casing (32) of the truncated-cone-shaped section (12) of the mandrel head (8) of the rivet mandrel (7) or the blind-rivet threaded bolt (28), in which grooves the excess component material expelled from the mandrel head (8) during flow punch forming can be connected in a mechanical form-locking fashion to the mandrel head (8) .

19. The assembly according to claim 18, **characterised in that** at least one edge of each groove (31) in the casing (30) of the truncated-cone-shaped section (12) of the mandrel head (8) of the rivet mandrel (7) or the blind-rivet threaded bolt (28) runs parallel to the front face (13) of the truncated-cone-shaped section (12).

20. The assembly according to any one of claims 14 to 19, **characterised in that** a truncated-cone-shaped centring element (36) with a relatively small base radius of the mandrel head (8) is constructed coaxially on the front face (13) of the truncated-cone-shaped section (12) of the mandrel head (8) of the rivet mandrel (7) or the blind-rivet threaded bolt (28).

21. The assembly according to any one of claims 14, 15 and 17 and 20, **characterised in that** the blind rivet body (4) is material-connected to the rivet mandrel (7) at its blind end (9).

22. The assembly according to any one of claims 14, 16 and 18 to 20, **characterised in that** the blind rivet body (4) is material-connected to the blind-rivet threaded-bolt (28) at its blind end (9).

## Revendications

1. Procédé d'assemblage de pièces (1; 2) accessibles d'un seul côté en utilisant un rivet aveugle (3) vers une douille de rivet aveugle (4) présentant une tête de pose (5), un mandrin riveté (7) guidé coaxialement dans le perçage (6) de la poulie qui présente sur l'extrémité côté aveugle (9) de rivet aveugle (3) une tête de mandrin (8) dont le diamètre est supérieur à la douille de rivet aveugle (4), **caractérisé par** la combinaison des étapes suivantes de procédé,
- la tête de mandrin (8) du mandrin riveté (7) est réalisée de sorte qu'une section de tête de mandrin (11) cylindrique, symétrique par rapport à l'axe longitudinal (10) du mandrin riveté (7) disposée sur l'extrémité aveugle (9) de la douille riveté aveugle (4), section dont le diamètre est supérieur à celui du mandrin riveté aveugle (4), se transforme en une section de tête de mandrin tronconique (12) dans le sens d'avance du rivet aveugle (3),
- l'ensemble du rivet aveugle (3) est décalé en rotation autour de son axe longitudinal (10) et est en même temps pressé par sa surface avant (13) de la section tronconique (12) de la tête de mandrin rotatif (8) par une force d'avance dirigée (A) axialement contre le composant (1) tourné vers la tête de mandrin (8), le matériau du composant étant chauffé et rendu coulant dans la zone de traitement (19) du premier composant (1),
- la tête rotative (8) refoule en continu un trou d'écoulement (20) traversant les deux composants (1; 2) formant le matériau de composant excédentaire (12) à travers le trou d'écoulement (20), lequel est relié comme un bouchon à la tête de mandrin (8), le rivet aveugle (3) traverse sans enlèvement de copeau les composants à relier (1; 2) jusqu'à ce que la tête de pose (5) de la douille de rivet aveugle (4) vienne s'appliquer contre le composant (1) et le matériau de composant excédentaire (12) relié à la tête de mandrin (8) chevauche comme un bouchon la tête de mandrin (8) et se relie hermétiquement à l'extrémité aveugle (9) de la douille de rivet aveugle (4),
- sur quoi le mandrin de rivet (7) est retiré par une force axiale (B) opposée à la force d'avance dirigée axialement (A) et la douille de rivet aveugle (4) est refoulée côté aveugle de sorte que les composants (1; 2) sont reliés entre eux de manière fixe hermétiquement par le rivet aveugle (3) et la tête de mandrin (8) reste au point de jonction des deux composants (1; 2).

2. Procédé selon la revendication 1, **caractérisé en ce que** le matériau de composant excédentaire refoulé lors de la formation de trou d'écoulement (20) de la tête de mandrin rotatif (8) par celle-ci hors du trou d'écoulement est soudé à froid avec la tête de mandrin (8) et est relié mécaniquement par adhérence des formes.

3. Procédé selon l'une des revendications 1 et 2, **caractérisé en ce qu'**il est utilisé un mandrin riveté (7) qui présente un point de rupture obligatoire (16) situé à l'intérieur du mandrin riveté aveugle (4) et **en ce que** le refoulement de l'extrémité aveugle (9) du mandrin riveté (4) s'effectue par l'action de la force d'avance (A) dirigée axialement et faisant impact sur la tête de pose (5) du mandrin riveté aveugle (4) et de la force axiale (B) attaquant le mandrin riveté (7) et opposé à la force d'avance jusqu'à la rupture de la zone de rupture obligatoire (16) du mandrin riveté (7), sur quoi le mandrin résiduel riveté (22) est éliminé par l'extrémité ouverte (23) du manchon aveugle riveté (4) tandis que la tête de mandrin (8) reste au point de jonction fixe hermétique des deux composants (1; 2).

4. Procédé selon l'une des revendications 1 et 2, **caractérisé en ce qu'**un rivet aveugle (3) est utilisé où le mandrin riveté (7) est réalisé comme un boulon fileté de rivet aveugle (28) guidé coaxialement dans le perçage (6) de la douille de rivet aveugle (4), boulon dont la tête de mandrin (8) reste après le rivetage aveugle des deux composants (1; 2) à leur point de liaison et s'étend hors de l'extrémité ouverte (9) du manchon riveté aveugle (4) et est disponible pour une application de montage.

5. Procédé selon l'une des revendications 1 à 3, **caractérisé en ce qu'**un rivet aveugle (3) est utilisé dont la douille de rivet aveugle (4) est réalisée côté tête de pose sous forme d'un écrou de rivet aveugle (33) dont le filet interne (34) est disponible pour le montage après achèvement de jonction fixe hermétique des deux composants (1) et (2) et après retrait du mandrin riveté résiduel (22) sectionné lors du refoulement de l'extrémité côté aveugle de la douille de rivet aveugle (4) sur le point de rupture (16) du mandrin riveté (7) hors de l'extrémité ouverture côté tête de pose (23) de la douille de rivet aveugle (4).

6. Procédé selon l'une des revendications 1 à 5, **caractérisé en ce qu'**au moins il est utilisé un composant (1; 2) réalisé avec un préperçage ou une prédécoupe (24) à travers laquelle le rivet rotatif aveugle (3) est guidé à travers jusqu'à ce que la surface avant plane (13) de la section tronconique (12) de la tête rotative de mandrin (8) du mandrin riveté (7) respectivement du boulon fileté de rivet aveugle (28) soit pressée contre la surface (26) du second composant (2) tournée vers la tête de mandrin (8) .

7. Procédé selon lune des revendications 1 à 6, **caractérisé en ce que** la géométrie de la tête de mandrin (8) ainsi que la force d'avance (A) dirigée axialement et exercée sur le rivet aveugle (3) et la vitesse de rotation (R) de la tête de mandrin (8) sont adaptées les unes aux autres de sorte que le matériau de composant excédentaire refoulé par la tête de mandrin (8) lors de la formation du trou d'écoulement et la tête de mandrin (8) entre en liaison mécanique par adhérence des formes.

8. Procédé selon l'une des revendications 1 à 6, **caractérisé en ce que** le matériau de composant excédentaire refoulé lors de la formation du trou d'écoulement de la tête de mandrin (8) du mandrin riveté (3) respectivement du boulon fileté de rivet aveugle (28) est soudé à froid sur la surface (11, 12, 13) de la tête de mandrin (8) à la manière d'un bouchon.

9. Procédé selon l'une des revendications 1 à 8, **caractérisé en ce que** l'enveloppe (30) de la section tronconique (12) de la tête de mandrin (8) du mandrin riveté (7) respectivement du boulon fileté de rivet aveugle (28) est munie de gorges circulaires (31) dans lesquelles le matériau de composant excédentaire refoulé par la tête de mandrin (8) lors de la formation du trou d'écoulement est relié mécaniquement par adhérence des formes à la tête de mandrin (8).

10. Procédé selon la revendication 9, **caractérisé en ce que** les gorges circulaires (31) de la section tronconique (12) de la tête de mandrin (8) sont réalisées sur l'enveloppe (30) de sorte qu'au moins un bord de chaque gorge (31) s'étend parallèlement à la face avant (13) de la section tronconique (13) de la tête de mandrin (8).

11. Procédé selon l'une des revendications précédentes 1 à 10, **caractérisé en ce que** la douille de rivet aveugle (4) est reliée par matière par son extrémité côté aveugle (9) avec le mandrin riveté (7) respectivement le boulon fileté de rivet aveugle (28) du rivet aveugle (3).

12. Procédé selon l'une des revendications 1 à 11, **caractérisé en ce qu'**un rivet aveugle (3) est utilisé, où il est ménagé sur la surface avant (13) de la section tronconique (12) de la tête de mandrin (8) du mandrin riveté (7) respectivement du boulon fileté de rivet aveugle (28) coaxialement, un élément de centrage tronconique (36) avec un rayon de base relativement petit en tant que pointe de positionnement de la tête de mandrin (8).

13. Procédé selon l'une des revendications 1 à 12, **caractérisé en ce que** plus que deux composants (1; 2) sont reliés simultanément à un rivet aveugle (3).

14. Assemblage de deux composants (1; 2) avec accessibilité unilatérale et un rivet aveugle (3) traversant les composants en les assemblant, rivet qui présente une douille de rivet aveugle (4) présentant une tête de pose (5) et un mandrin riveté (7) guidé coaxialement dans leur perçage (6), mandrin qui possède sur l'extrémité côté aveugle (9) du mandrin riveté (3) une tête de mandrin (8) dont le diamètre est supérieur à celui de la douille de rivet aveugle (4),
- la douille de rivet aveugle (4) et le mandrin riveté (4) pouvant être décalés en commun en rotation autour de l'axe longitudinal du rivet aveugle (3) et peuvent être entraînés axialement en même temps dans le sens d'avance (A) du rivet aveugle (3) .
- la tête de mandrin (8) du mandrin riveté (7) présentant sur l'extrémité côté aveugle (9) de la douille de rivet aveugle (4) une section cylindrique de tête de mandrin (11) disposée symétriquement par rapport à l'axe longitudinal (10) du mandrin riveté (7), section dont le diamètre est supérieur à celui de la douille de rivet aveugle (4) et qui se transforme en une section de tête de mandrin (12) tronconique dans le sens d'avance (A) de la tête de mandrin (8), section dont la surface avant (13) s'étendant perpendiculairement à l'axe longitudinal (10) du mandrin riveté (7) peut être comprimée en rotation contre la surface opposée (26) du composant voisin (1) lors de l'avance dirigée axialement du rivet aveugle (3),
- la matériau de composant pouvant être chauffé dans la zone de traitement (17) du premier composant (1) et être placé dans un état coulant, un trou d'écoulement (18), qui traverse les composants (1; 2), pouvant être formé et le matériau excédentaire de composant pouvant être expulsé, lequel recouvre la tête de mandrin (8) à la manière d'un chapeau et peut être relié hermétiquement sur l'extrémité côté aveugle de la douille de rivet aveugle (4) à la surface du chapeau et à l'enveloppe externe (19) de la douille de rivet aveugle (4) du rivet aveugle (3) qui peut être avancé en rotation par le trou d'écoulement (18) jusqu'à la butée de la tête de pose (5) du rivet aveugle (3) sur la surface du premier composant (1), et
- le mandrin riveté (7) peut être rentré axialement au moyen d'une force axiale (B) qui est dirigée en opposition de la force d'avance dirigée axialement (A), par rapport à la douille de rivet aveugle (4) en refoulant l'extrémité côté aveugle (9) de la douille de rivet aveugle (4) jusqu'à fixation de la tête de mandrin (8) du mandrin riveté (7) dans la position d'assemblage hermétique des deux composants (1; 2).

15. Assemblage selon la revendication 14, **caractérisé en ce que** le mandrin riveté (7) présente sur sa section longitudinale se trouvant dans la douille de rivet aveugle (4), un point de rupture obligatoire (16) dont la résistance à la rupture est dépassée au maximum du refoulement du rivet aveugle (3).

16. Assemblage selon la revendication 14, **caractérisé en ce que** le mandrin riveté (7) est réalisé comme un boulon fileté de rivet aveugle (28) guidé coaxialement dans le perçage (6) de la douille de rivet aveugle (4), dont la tête de mandrin (8) reste dans le point de liaison des composant (1; 2) après la pose du rivet aveugle (3), la section longitudinale (29) du boulon fileté de rivet aveugle (28) s'étendant depuis l'extrémité ouverte (23) de la douille de rivet aveugle (4), qui s'étend depuis l'extrémité ouverte (23) de la douille de rivet aveugle (4), étant disponible pour le montage.

17. Assemblage selon l'une des revendications 14 et 15, **caractérisé en ce que** la douille de rivet aveugle (4) du rivet aveugle (3) est réalisée côté tête de pose comme un écrou de rivet aveugle (33) dont le filetage interne (34) est disponible pour le montage après le rivetage aveugle des composants (1; 2) et après retrait du mandrin riveté résiduel (22) hors de l'ouverture (35) de l'écrou de rivet aveugle (35).

18. Assemblage selon l'une des revendications 14 à 17, **caractérisé en ce que** dans l'enveloppe (32) de la section tronconique (12) de la tête de mandrin (8) du rivet aveugle (7) respectivement du boulon fileté de rivet aveugle (28), il est prévu des gorges (31) dans lesquels le matériau de composant excédentaire refoulé par la tête de mandrin (8) lors de la formation du trou d'écoulement est reliable mécaniquement par adhérence des formes à la tête de mandrin (8).

19. Assemblage selon la revendication 8, **caractérisé en ce qu'**au moins un bord de chaque gorge (31) s'étend parallèlement à la face avant (13) de la section tronconique (12) de la tête de mandrin (8) dans l'enveloppe (30) de la section tronconique (12) de la tête de mandrin (8) du mandrin riveté (7) respectivement du boulon fileté de rivet aveugle (28).

20. Assemblage selon l'une des revendications 14 à 19, **caractérisé en ce que** sur la surface avant (13) de la section tronconique (12) de la tête de mandrin (8) du mandrin riveté (7) respectivement du boulon fileté de rivet aveugle (28), il est formé coaxialement un élément de centrage tronconique (36) avec un rayon de base relativement petit comme point de position de la tête de mandrin (8).

21. Assemblage selon l'une des revendications 14, 15 et 17 à 20, **caractérisé en ce que** la douille de rivet aveugle (4) est reliée par le matériau sur son extrémité côté aveugle (9) au mandrin riveté (7).

22. Assemblage selon l'une des revendications 14, 16 et 18 à 20, **caractérisé en ce que** la douille de rivet aveugle (4) est reliée par le matériau sur son extrémité côté aveugle (9) au boulon fileté de rivet aveugle (28).
